# EUROPEAN PATENT APPLICATION

(11) **EP 4 472 112 A1**
(43) Date of publication of application: **04.12.2024**
(21) Application number: 23762812.8
(22) Date of filing: 23.02.2023
(51) Int. Cl.: H04L 1/00

(54) **DATA PROCESSING METHOD, APPARATUS, DEVICE, SYSTEM AND COMPUTER READABLE STORAGE MEDIUM**

(30) Priority: 02.03.2022 CN 202210198049; 20.05.2022 CN 202210554595
(71) Applicant: Huawei Technologies Co., Ltd., Shenzhen, Guangdong 518129 (CN)
(72) Inventor: HE, Xiang, Shenzhen, Guangdong 518129 (CN); WANG, Xinyuan, Shenzhen, Guangdong 518129 (CN); REN, Hao, Shenzhen, Guangdong 518129 (CN)
(74) Representative: Goddar, Heinz J.
(86) International application number: PCT/CN2023/077958
(87) International publication number: WO 2023/165412

(57) **Abstract**

This application discloses a data processing method and apparatus, a device, a system, and a computer-readable storage medium, and relates to the field of communication technologies. The method includes: A first device obtains at least one service flow, where any service flow in the at least one service flow includes a plurality of code blocks, and the code block includes a data unit and a type, or the code block includes a type, a type indication, and code block content; and the first device maps the plurality of code blocks to at least one physical layer PHY link based on a coding scheme of the code blocks, where the at least one PHY link is used to transmit the plurality of code blocks. According to the method, FlexE that is based on the code block including the data unit and the type can be implemented, or FlexE that is based on the code block including the type, the type indication, and the code block content can be implemented.

## Description

This application claims priorities to Chinese Patent Application No. 202210198049.7, filed with the China National Intellectual Property Administration on March 2, 2022 and entitled "DATA PROCESSING METHOD AND APPARATUS, AND NETWORK SYSTEM", and to Chinese Patent Application No. 202210554595.X, filed with the China National Intellectual Property Administration on May 20, 2022 and entitled "DATA PROCESSING METHOD AND APPARATUS, DEVICE, SYSTEM, AND COMPUTER-READABLE STORAGE MEDIUM", which are incorporated herein by reference in their entireties.

### TECHNICAL FIELD

This application relates to the field of communication technologies, and in particular, to a data processing method and apparatus, a device, a system, and a computer-readable storage medium.

### BACKGROUND

With diversification of Internet protocol (Internet protocol, IP) network applications and services, there is a growing trend of increasing network traffic. Because rates in current Ethernet interface standards are all fixed, the optical internetworking forum (optical internetworking forum, OIF) formulates the flexible Ethernet (flexible Ethernet, FlexE) protocol based on the institute of electrical and electronics engineers (Institute of Electrical and Electronics Engineers, IEEE) 802.3 protocol, to meet a requirement for higher bandwidth. The FlexE protocol defines a shim (FlexE shim) between a media access control (media access control, MAC) layer and a physical coding sublayer (physical coding sublayer, PCS). Ethernet interface rates can flexibly match a plurality of service scenarios via the shim.

### SUMMARY

This application provides a data processing method and apparatus, a device, a system, and a computer-readable storage medium, to implement FlexE that is based on a code block coded by using a specific coding scheme.

According to a first aspect, a data processing method is provided. The method includes: A first device obtains at least one service flow, where any service flow in the at least one service flow includes a plurality of code blocks, and the code block includes a data unit and a type, or the code block includes a type, a type indication, and code block content; and then maps the plurality of code blocks included in the at least one service flow to at least one PHY link based on a coding scheme of the code blocks, where the at least one PHY link is used to transmit the plurality of code blocks. According to the method, FlexE that is based on the code block including the data unit and the type can be implemented, or FlexE that is based on the code block including the type, the type indication, and the code block content can be implemented.

In a possible implementation, any PHY link in the at least one PHY link includes at least one slot, the any PHY link in the at least one PHY link is further used to transmit s overhead multiframes, a format of the s overhead multiframes is determined based on the coding scheme, the s overhead multiframes include a mapping relationship between the at least one slot and the at least one service flow, the mapping relationship is used to map the plurality of code blocks to the PHY link, and s is determined based on a transmission rate of the PHY link.

In a possible implementation, a rate of the slot is 5m Gbps, one slot is used to transmit one code block, and m is an integer greater than 1. When the rate of the slot included in the PHY link is 5m Gbps, the code block included in the at least one service flow can be transmitted at a high rate.

In a possible implementation, any overhead multiframe in the s overhead multiframes includes a plurality of overhead frames, and for at least one overhead frame in the plurality of overhead frames, any overhead frame in the at least one overhead frame includes a mapping relationship between a slot and a service flow.

In a possible implementation, for the any overhead frame in the at least one overhead frame, the any overhead frame includes a plurality of overhead blocks, and at least one overhead block in the plurality of overhead blocks includes the mapping relationship between the slot and the service flow.

In a possible implementation, the any overhead multiframe includes 32 overhead frames, and one overhead frame includes two overhead blocks.

In a possible implementation, the any PHY link includes k slots, for the any overhead multiframe in the s overhead multiframes, the overhead multiframe includes mapping relationships between k/s slots and the at least one service flow, k is determined based on a ratio of the transmission rate of the PHY link to the rate of the slot, and k is an integer multiple of s.

In a possible implementation, every s slots in the k slots are a slot group, k/s slots corresponding to an i^{th} overhead multiframe in the s overhead multiframes include i^{th} slots in all slot groups, and i is an integer greater than or equal to 0 and less than s, or i is an integer greater than 0 and less than or equal to s.

In a possible implementation, every k/s slots in the k slots are a slot group, k/s slots corresponding to an i^{th} overhead multiframe in the s overhead multiframes include slots included in an i^{th} slot group, and i is an integer greater than or equal to 0 and less than s, or i is an integer greater than 0 and less than or equal to s. The k slots included in the PHY link may be combined in different manners into the k/s slots that separately correspond to the i^{th} overhead multiframe, and a correspondence between an overhead multiframe and a slot is flexible.

In a possible implementation, the any PHY link is used to transmit s overhead blocks every time n*k code blocks are transmitted, an r^{th} overhead block in the s overhead blocks forms an r^{th} overhead multiframe in the s overhead multiframes, n is a positive integer, and r is an integer greater than or equal to 0 and less than s, or r is an integer greater than 0 and less than or equal to s.

In a possible implementation, mapping the plurality of code blocks to the at least one physical layer PHY link includes: obtaining an overhead multiframe corresponding to the at least one service flow; and modifying the overhead multiframe, and mapping the plurality of code blocks to the at least one PHY link based on a modified overhead multiframe. The overhead multiframe is modified, so that the mapping relationship between the at least one slot included in the PHY link and the at least one service flow can be controlled. In this way, the code block included in the service flow can be transmitted in a specified slot, and a transmission carrier of the code block in the service flow is more flexible.

In a possible implementation, the plurality of code blocks include a code block of a data type and a code block of an idle type, and mapping the plurality of code blocks to the at least one physical layer PHY link includes: replacing at least one code block of the idle type in the plurality of code blocks with a code block including operation administration and maintenance OAM information, where the OAM information is used to manage the code block of the data type in the plurality of code blocks; and mapping a plurality of code blocks obtained after replacement to the at least one PHY link. The idle code block is replaced with the code block including the OAM management information. According to this method, the code block of the data type can be managed more precisely, and a transmission manner of the code block is more flexible.

In a possible implementation, the any overhead multiframe in the s overhead multiframes further includes at least two management channels, and the management channel includes management information used to manage the at least one PHY link.

In a possible implementation, m is 4 or 5. When m is 4, the any PHY is applicable to a FlexE technology implemented based on standards such as IA OIF-FLEXE-02.1/02.2, and compatibility is good.

In a possible implementation, both the overhead block and the code block are 257 bits.

In a possible implementation, n is 639 or 1279.

According to a second aspect, a data processing method is provided. The method includes: A second device obtains a plurality of code blocks transmitted over at least one physical layer PHY link, where the plurality of code blocks include a code block of an overhead type and a code block of a data type, and the code block of the data type includes a data unit and a type, or the code block of the data type includes a type, a type indication, and code block content; and the second device demaps the code block of the data type based on a coding scheme of the code block of the data type and the code block of the overhead type, to obtain at least one service flow, where the at least one service flow includes the code block of the data type. According to the method, FlexE that is based on the code block including the data unit and the type can be implemented, or FlexE that is based on the code block including the type, the type indication, and the code block content can be implemented.

According to a third aspect, a data processing apparatus is provided. The apparatus is used for a first device, and the apparatus includes:
an obtaining module, configured to obtain at least one service flow, where any service flow in the at least one service flow includes a plurality of code blocks, and the code block includes a data unit and a type, or the code block includes a type, a type indication, and code block content; and
a mapping module, configured to map the plurality of code blocks to at least one physical layer PHY link based on the coding scheme of the code blocks, where the at least one PHY link is used to transmit the plurality of code blocks.

In a possible implementation, any PHY link in the at least one PHY link includes at least one slot, the any PHY link in the at least one PHY link is further used to transmit s overhead multiframes, a format of the s overhead multiframes is determined based on the coding scheme, the s overhead multiframes include a mapping relationship between the at least one slot and the at least one service flow, the mapping relationship is used to map the plurality of code blocks to the PHY link, and s is determined based on a transmission rate of the PHY link.

In a possible implementation, a rate of the slot is 5m Gbps, one slot is used to transmit one code block, and m is an integer greater than 1.

In a possible implementation, any overhead multiframe in the s overhead multiframes includes a plurality of overhead frames, and for at least one overhead frame in the plurality of overhead frames, any overhead frame in the at least one overhead frame includes a mapping relationship between a slot and a service flow.

In a possible implementation, for the any overhead frame in the at least one overhead frame, the any overhead frame includes a plurality of overhead blocks, and at least one overhead block in the plurality of overhead blocks includes the mapping relationship between the slot and the service flow.

In a possible implementation, the any overhead multiframe includes 32 overhead frames, and one overhead frame includes two overhead blocks.

In a possible implementation, the any PHY link includes k slots, for the any overhead multiframe in the s overhead multiframes, the overhead multiframe includes mapping relationships between k/s slots and the at least one service flow, k is determined based on a ratio of the transmission rate of the PHY link to the rate of the slot, and k is an integer multiple of s.

In a possible implementation, every s slots in the k slots are a slot group, k/s slots corresponding to an i^{th} overhead multiframe in the s overhead multiframes include i^{th} slots in all slot groups, and i is an integer greater than or equal to 0 and less than s, or i is an integer greater than 0 and less than or equal to s.

In a possible implementation, every k/s slots in the k slots are a slot group, k/s slots corresponding to an i^{th} overhead multiframe in the s overhead multiframes include slots included in an i^{th} slot group, and i is an integer greater than or equal to 0 and less than s, or i is an integer greater than 0 and less than or equal to s.

In a possible implementation, the any PHY link is used to transmit s overhead blocks every time n*k code blocks are transmitted, an r^{th} overhead block in the s overhead blocks forms an r^{th} overhead multiframe in the s overhead multiframes, n is a positive integer, and r is an integer greater than or equal to 0 and less than s, or r is an integer greater than 0 and less than or equal to s.

In a possible implementation, the mapping module is configured to: obtain an overhead multiframe corresponding to the at least one service flow, and modify the overhead multiframe, and map the plurality of code blocks to the at least one PHY link based on a modified overhead multiframe.

In a possible implementation, the plurality of code blocks include a code block of a data type and a code block of an idle type, and the mapping module is configured to: replace at least one code block of the idle type in the plurality of code blocks with a code block including operation administration and maintenance OAM information, where the OAM information is used to manage the code block of the data type in the plurality of code blocks; and map a plurality of code blocks obtained after replacement to the at least one PHY link.

In a possible implementation, the any overhead multiframe in the s overhead multiframes further includes at least two management channels, and the management channel includes management information used to manage the at least one PHY link.

In a possible implementation, m is 4 or 5.

In a possible implementation, both the overhead block and the code block are 257 bits.

In a possible implementation, n is 639 or 1279.

According to a fourth aspect, a data processing apparatus is provided. The apparatus is used for a second device, and the apparatus includes:
an obtaining module, configured to obtain a plurality of code blocks transmitted over at least one physical layer PHY link, where the plurality of code blocks include a code block of an overhead type and a code block of a data type, and the code block of the data type includes a data unit and a type, or the code block of the data type includes a type, a type indication, and code block content; and
a demapping module, configured to demap the code block of the data type based on a coding scheme of the code block of the data type and the code block of the overhead type, to obtain at least one service flow, where the at least one service flow includes the code block of the data type.

According to a fifth aspect, a network device is provided, including a processor. The processor is coupled to a memory. The memory stores at least one program instruction or code, and the at least one program instruction or the code is loaded and executed by the processor, to enable the network device to implement any data processing method according to the first aspect or the second aspect.

According to a sixth aspect, a network system is provided. The system includes a first device and a second device. The first device is configured to perform any data processing method according to the first aspect, and the second device is configured to perform any data processing method according to the second aspect.

According to a seventh aspect, a computer-readable storage medium is provided. The storage medium stores at least one program instruction or code, and when the program instruction or the code is loaded and executed by a processor, a computer is enabled to implement any data processing method according to the first aspect or the second aspect.

According to an eighth aspect, a communication apparatus is provided. The apparatus includes a transceiver, a memory, and a processor. The transceiver, the memory, and the processor communicate with each other through an internal connection path. The memory is configured to store instructions. The processor is configured to execute the instructions stored in the memory, to control the transceiver to receive a signal, and control the transceiver to send a signal. In addition, when the processor executes the instructions stored in the memory, the processor is enabled to perform any data processing method according to the first aspect or the second aspect.

For example, there are one or more processors, and there are one or more memories.

For example, the memory may be integrated with the processor, or the memory and the processor are separately disposed.

In a specific implementation process, the memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this application.

According to a ninth aspect, a computer program product is provided. The computer program product includes computer program code, and when the computer program code is run by a computer, the computer is enabled to perform any data processing method according to the first aspect or the second aspect.

According to a tenth aspect, a chip is provided, including a processor, configured to: invoke instructions from a memory and run the instructions stored in the memory, to enable a communication device in which the chip is mounted to perform any data processing method according to the first aspect or the second aspect.

For example, the chip further includes an input interface, an output interface, and the memory. The input interface, the output interface, the processor, and the memory are connected through an internal connection path.

It should be understood that, for beneficial effects achieved by the technical solutions of the third aspect to the tenth aspect and corresponding possible implementations of the technical solutions of the third aspect to the tenth aspect of this application, refer to the technical effects of the first aspect, the second aspect, and the corresponding possible implementations of the first aspect and the second aspect. Details are not described herein again.

### BRIEF DESCRIPTION OF DRAWINGS

FIG. 1 is a diagram of a structure of a FlexE group according to an embodiment of this application;
FIG. 2 is a flowchart of a data processing method according to an embodiment of this application;
FIG. 3 is a diagram of a structure of a code block according to an embodiment of this application;
FIG. 4 is a diagram of a structure of another code block according to an embodiment of this application;
FIG. 5 is a diagram of a data structure of a PHY link according to an embodiment of this application;
FIG. 6 is a diagram of a data structure of another PHY link according to an embodiment of this application;
FIG. 7A and FIG. 7B are a diagram of a structure of an overhead frame and an overhead multiframe according to an embodiment of this application;
FIG. 8 is a diagram of transmitting a code block included in a service flow over a PHY link according to an embodiment of this application;
FIG. 9A and FIG. 9B are a diagram of a process of mapping a plurality of code blocks according to an embodiment of this application;
FIG. 10A and FIG. 10B are a diagram of another process of mapping a plurality of code blocks according to an embodiment of this application;
FIG. 11 is a diagram of still another process of mapping a plurality of code blocks according to an embodiment of this application;
FIG. 12 is a flowchart of another data processing method according to an embodiment of this application;
FIG. 13 is a diagram of a structure of a data processing apparatus according to an embodiment of this application;
FIG. 14 is a diagram of a structure of another data processing apparatus according to an embodiment of this application;
FIG. 15 is a diagram of a structure of a network device according to an embodiment of this application; and
FIG. 16 is a diagram of a structure of a network device according to an embodiment of this application.

### DESCRIPTION OF EMBODIMENTS

Terms used in embodiments of this application are merely used to explain embodiments of this application, but are not intended to limit this application. The following describes embodiments of this application with reference to the accompanying drawings.

Ethernet interface standard formulation and product development are step-by-step, and rates in current Ethernet interface standards are all fixed. Therefore, there is a gap between a transmission requirement and an actual interface capability of a device, and a requirement for higher bandwidth needs to be met at a current Ethernet interface rate level. To address this issue, the OIF organization formulates the FlexE protocol. By defining a shim, the FlexE protocol enables Ethernet interface rates to flexibly match a plurality of service scenarios. In addition, when a network processor (network processor, NP)/forwarding device with higher bandwidth appears, performance of the device can be maximized without waiting for a new fixed-rate Ethernet standard to be released.

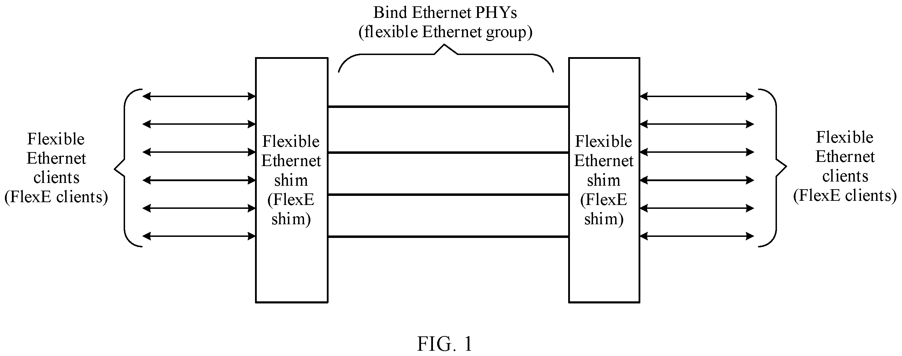

A basic function of FlexE is to map, based on a time-division multiplexing (time-division multiplexing, TDM) mechanism of a FlexE shim, service flows of p flexible Ethernet clients (FlexE clients) to a flexible Ethernet group (FlexE group) including q physical layer (physical layer, PHY) links. Both p and q are positive integers. For example, a basic structure of FlexE may be shown in FIG. 1. In FIG. 1, p is 6, and q is 4. In other words, in FlexE shown in FIG. 1, service flows of six FlexE clients are mapped, based on a TDM mechanism of a FlexE shim, to a FlexE group including four PHY links.

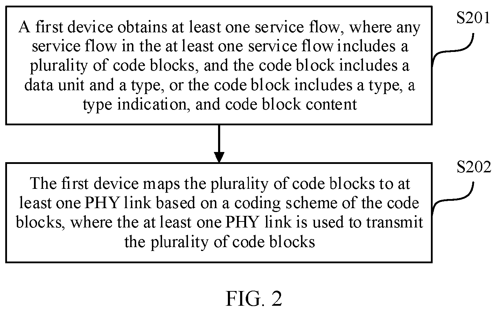

Embodiments of this application provide a data processing method. The method is applied to a network device, and the method can implement FlexE based on a code block coded by using a specific coding scheme. For example, a first device performs the data processing method. As shown in FIG. 2, the method includes but is not limited to S201 and S202.

S201: The first device obtains at least one service flow, where any service flow in the at least one service flow includes a plurality of code blocks, and the code block includes a data unit and a type, or the code block includes a type, a type indication, and code block content.

In a possible implementation, a manner in which the first device obtains the at least one service flow includes: The first device generates the at least one service flow, or the first device receives the at least one service flow sent by another device. For example, content included in the code block corresponds to the coding scheme of the code block, and the first device may determine the coding scheme of the code block based on the content included in the code block. For example, when the code block includes the type and the data unit, or the code block includes the type, the type indication, and the code block content, the coding scheme of the code block is 256B/257B coding. In other words, the code block is a 257-bit code block.

In a possible implementation, a 0^{th} bit of the code block indicates the type, and the type indicates whether the code block is a code block including only data or a code block including a control word. For example, when the 0^{th} bit is 1, the code block is a code block including only data, the remaining 256 bits of the code block indicate a data unit, and the data unit includes only data. When the 0^{th} bit is 0, the code block is a code block including a control word, a 4^{th} bit to a 1^{st} bit of the code block indicate a type indication, the type indication indicates a position of the control word in code block content, the remaining 252 bits of the code block indicate code block content, and the code block content includes the control word. Certainly, when the code block is the code block including the control word, the code block content may also include data. This is not limited in embodiments of this application.

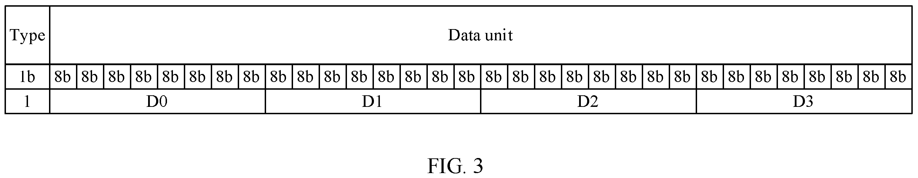

For example, FIG. 3 is a diagram of a structure of a code block according to an embodiment of this application. Herein, b indicates a bit. For example, 1b indicates 1 bit, and 8b indicates 8 bits. As shown in FIG. 3, a 0^{th} bit of the code block indicates a type, and a 256^{th} bit to a 1^{st} bit of the code block indicate a data unit. The 0^{th} bit is 1. A 64^{th} bit to the 1^{st} bit are denoted as D0. A 128^{th} bit to a 65^{th} bit are denoted as D1. A 192^{nd} bit to a 129^{th} bit are denoted as D2. The 256^{th} bit to a 193^{rd} bit are denoted as D3. D0 to D3 all belong to the data unit. For example, D0 to D3 all indicate data.

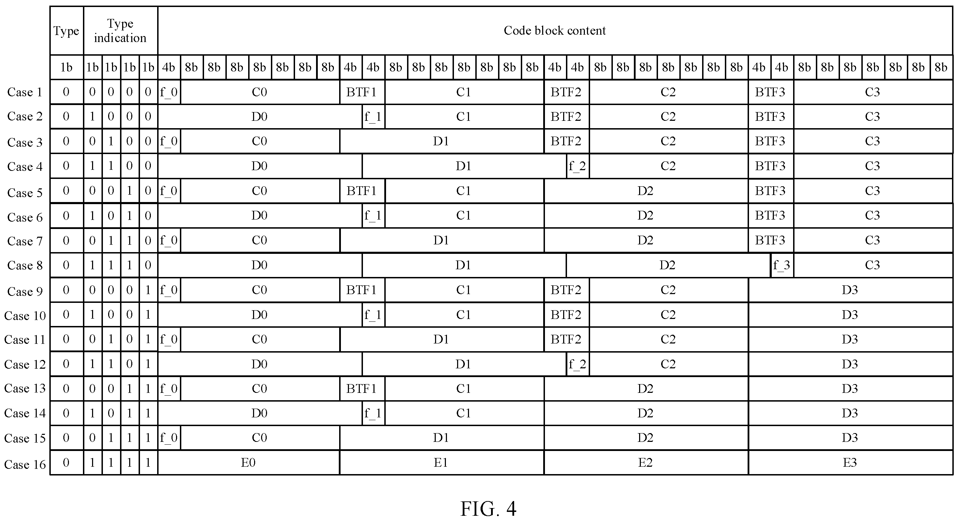

For example, FIG. 4 is a diagram of a structure of another code block according to an embodiment of this application. Herein, b indicates a bit. As shown in FIG. 4, a 0^{th} bit of the code block indicates a type, a 4^{th} bit to a 1^{st} bit of the code block indicate a type indication, and a 256^{th} bit to a 5^{th} bit indicate code block content. For example, for any code block included in any service flow, a structure of the code block is a structure corresponding to any case in FIG. 4. For example, the structure of the code block is that corresponding to Case 1. The 0^{th} bit of the code block is 0. The 4^{th} bit to the 1^{st} bit are all 0. An 8^{th} bit to the 5^{th} bit are denoted as f_0. A 64^{th} bit to a 9^{th} bit are denoted as C0. Herein, f_0 and C0 belong to the code block content and correspond to the 1^{st} bit. A 72^{nd} bit to a 65^{th} bit are denoted as BTF1. A 128^{th} bit to a 73^{rd} bit are denoted as C1. BTF1 and C1 belong to the code block content and correspond to a 2^{nd} bit. A 136^{th} bit to a 129^{th} bit are denoted as BTF2. A 192^{nd} bit to a 137^{th} bit are denoted as C2. BTF2 and C2 belong to the code block content and correspond to a 3^{rd} bit. A 200^{th} bit to a 193^{rd} bit are denoted as BTF3. The 256^{th} bit to a 201^{st} bit are denoted as C3. BTF3 and C3 belong to the code block content and correspond to the 4^{th} bit. For example, f_0 and C0 indicate a control word, BTF1 and C1 indicate a control word, BTF2 and C2 indicate a control word, and BTF3 and C3 indicate a control word.

A principle of another case in FIG. 4 is the same as that of the foregoing Case 1. For example, the structure of the code block is that corresponding to Case 2. The 0^{th} bit is 0. The 4^{th} bit to the 1^{st} bit are 1, 0, 0, and 0, respectively. A 68^{th} bit to the 5^{th} bit are denoted as D0. D0 belongs to the code block content and corresponds to the 1^{st} bit. A 72^{nd} bit to a 69^{th} bit are denoted as f_1. A 128^{th} bit to a 73^{rd} bit are denoted as C1. Herein, f_1 and C1 belong to the code block content and correspond to a 2^{nd} bit. A 136^{th} bit to a 129^{th} bit are denoted as BTF2. A 192^{nd} bit to a 137^{th} bit are denoted as C2. BTF2 and C2 belong to the code block content and correspond to a 3^{rd} bit. A 200^{th} bit to a 193^{rd} bit are denoted as BTF3. The 256^{th} bit to a 201^{st} bit are denoted as C3. BTF3 and C3 belong to the code block content and correspond to a 4^{th} bit. For example, D0 indicates data, f_1 and C1 indicate a control word, BTF2 and C2 indicate a control word, and BTF3 and C3 indicate a control word. Other cases in FIG. 4 are not described herein.

S202: The first device maps the plurality of code blocks to at least one PHY link based on a coding scheme of the code blocks, where the at least one PHY link is used to transmit the plurality of code blocks.

In a possible implementation, the first device determines the coding scheme of the plurality of code blocks, and maps the plurality of code blocks to the at least one PHY link based on the coding scheme of the code blocks, so that the plurality of code blocks are transmitted over the at least one PHY link. For example, the first device determines, based on a data unit and a type included in a code block, that a coding scheme of the plurality of code blocks is 256B/257B coding, and maps the plurality of code blocks to the at least one PHY link based on 256B/257B coding. For another example, the first device determines, based on a type, a type indication, and code block content included in a code block, that a coding scheme of the plurality of code blocks is 256B/257B coding, and maps the plurality of code blocks to the at least one PHY link based on 256B/257B coding. For example, the at least one PHY link is referred to as a flexible Ethernet group. In other words, the first device maps the plurality of code blocks to a flexible Ethernet group based on the coding scheme, and the flexible Ethernet group is used to transmit the plurality of code blocks.

For example, for any PHY link in the at least one PHY link, the any PHY link includes at least one slot. A rate of the slot is 5m Gbps. One slot is used to transmit one code block, and m is an integer greater than 1. Herein, 5m indicates five times of m, or may be denoted as 5*m. In a possible implementation, m is 4 or 5. To be specific, the any PHY link includes at least one slot whose rate is 20 Gbps, or the any PHY link includes at least one slot whose rate is 25 Gbps. For example, when m is 4, that is, when the any PHY link includes at least one slot whose rate is 20 Gbps, the any PHY is applicable to a FlexE technology implemented based on standards such as IA OIF-FLEXE-02.1/02.2, and compatibility is good.

In a possible implementation, for any PHY link, a quantity of slots included in the PHY link is determined based on a ratio of a transmission rate of the PHY link to the rate. For example, the quantity of slots included in the PHY link is denoted as k. To be specific, the PHY link includes k slots, and k is determined based on a ratio of a transmission rate of the PHY link to a rate of the slot. For example, when the PHY link is an 800 gigabit Ethernet (gigabit Ethernet, GE) PHY, that is, a transmission rate of the PHY link is 800 Gbps, k=800 Gbps/25 Gbps=32. When the PHY link is a 1.6 terabit Ethernet (terabit Ethernet, TE) PHY, that is, a transmission rate of the PHY link is 1.6 terabits per second (terabits per second, Tbps), k=1.6 Tbps/25 Gbps=64.

In a possible implementation, for the k slots included in the any PHY link, the k slots are referred to as a cycle, and a bearer channel of the code blocks is formed through cycling of the k slots. For example, for an 800 GE PHY, 32 slots included in the 800 GE PHY are used as a cycle, and a bearer channel of the code blocks is formed through cycling of the 32 slots. For a 1.6 TE PHY, 64 slots included in the 1.6 TE are used as a cycle, and a bearer channel of the code blocks is formed through cycling of the 64 slots.

In a possible implementation, the any PHY link in the at least one PHY link is further used to transmit s overhead multiframes (overhead multiframes), and a format of the s overhead multiframes is determined based on the coding scheme of the code blocks. For a format of the overhead multiframes, refer to the related descriptions in the following. Details are not described herein. The s overhead multiframes include a mapping relationship between the at least one slot included in the PHY link and at least one service flow. The mapping relationship is used to map the plurality of code blocks to the at least one PHY link. Herein, s is determined based on the transmission rate of the PHY link. For example, s is determined based on a correspondence between the transmission rate of a PHY link and a quantity of the overhead multiframes. For example, when the PHY link includes k slots, the s overhead multiframes include a mapping relationship between the k slots and at least one service flow. One slot corresponds to one service flow. A plurality of slots may correspond to a same service flow, or may correspond to different service flows. To be specific, when the s overhead multiframes include a mapping relationship between the k slots and all the service flows in the at least one service flow, the mapping relationship is used to map a plurality of code blocks included in all the service flows to the PHY link. When the s overhead multiframes include a mapping relationship between the k slots and some service flows in the at least one service flow, the mapping relationship is used to map a plurality of code blocks included in the some service flows to the PHY link.

For example, s is exactly divided by k. In other words, k is an integer multiple of s. The correspondence between the transmission rate of the PHY link and the quantity of the overhead multiframes may be determined based on a multiple of the transmission rate of the PHY link for a reference rate. For example, the transmission rate of the PHY link is w times the reference rate, and the PHY link is used to transmit w overhead multiframes. For example, the reference rate is 800 Gbps.

In a possible implementation, the correspondence between the transmission rate of the PHY link and the quantity of the overhead multiframes includes: When the PHY link is an 800 GE PHY, s is 1, or when the PHY link is a 1.6 TE PHY, s is 2. To be specific, for an 800 GE PHY, when a rate of a slot is 25 Gbps, the 800 GE PHY is used to transmit one overhead multiframe, and the overhead multiframe includes a mapping relationship between 32 slots and at least one service flow. For a 1.6 TE PHY, when a rate of a slot is 25 Gbps, the 1.6 TE PHY is used to transmit two overhead multiframes, and the two overhead multiframes include a mapping relationship between 64 slots and at least one service flow.

For example, for any overhead multiframe in the s overhead multiframes, the overhead multiframe includes a mapping relationship between k/s slots and the at least one service flow. For example, for the foregoing 1.6 TE PHY, the 1.6 TE PHY is used to transmit two overhead multiframes, and each overhead multiframe includes a mapping relationship between 32 slots and the at least one service flow. In a possible implementation, for an i^{th} overhead multiframe in the s overhead multiframes, k/s slots corresponding to the i^{th} overhead multiframe include but are not limited to the following Case 1 and Case 2. Herein, i is an integer greater than or equal to 0 and less than or equal to s, or i is an integer greater than 0 and less than or equal to s.

Case 1: Every s slots in the k slots are a slot group, and the k/s slots corresponding to the i^{th} overhead multiframe in the s overhead multiframes include i^{th} slots in all slot groups.

For example, for the 1.6 TE PHY, the 1.6 TE PHY includes 64 slots, and every two slots in the 64 slots are a slot group. In this case, the 1.6 TE PHY includes 32 slot groups. The 1.6 TE PHY is used to transmit two overhead multiframes, and 32 slots corresponding to an i^{th} overhead multiframe in the two overhead multiframes include i^{th} slots in the 32 slot groups. For example, if i=0 or 1, 32 slots corresponding to a 0^{th} overhead multiframe include 0^{th} slots in the 32 slot groups, and 32 slots corresponding to a 1^{st} overhead multiframe include 1^{st} slots in the 32 slot groups. For another example, if i=1 or 2, 32 slots corresponding to a 1^{st} overhead multiframe include 1^{st} slots in the 32 slot groups, and 32 slots corresponding to a 2^{nd} overhead multiframe include 2^{nd} slot in the 32 slot groups. For example, if the 64 slots included in the 1.6 TE PHY are a slot 0 to a slot 63, respectively, the 32 slots corresponding to the 1^{st} overhead multiframe include the slot 0, a slot 2, a slot 4, ..., and a slot 62, and the 32 slots corresponding to the 2^{nd} overhead multiframe include a slot 1, a slot 3, a slot 5, ..., and the slot 63.

Case 2: Every k/s slots in the k slots are a slot group, and k/s slots corresponding to an i^{th} overhead multiframe in the s overhead multiframes include slots included in an i^{th} slot group.

For example, for the 1.6 TE PHY, the 1.6 TE PHY includes 64 slots, and every 32 slots in the 64 slots are a slot group. In this case, the 1.6 TE PHY includes 2 slot groups. The 1.6 TE PHY is used to transmit two overhead multiframes, and 32 slots corresponding to an i^{th} overhead multiframe in the two overhead multiframes include slots included in an i^{th} slot group in the two slot groups. For example, if i=0 or 1, 32 slots corresponding to a 0^{th} overhead multiframe include slots included in a 0^{th} slot group, and 32 slots corresponding to a 1^{st} overhead multiframe include slots included in a 1^{st} slot group. For another example, if i=1 or 2, 32 slots corresponding to a 1^{st} overhead multiframe include slots included in a 1^{st} slot group, and 32 slots corresponding to a 2^{nd} overhead multiframe include slots included in a 2^{nd} slot group. For example, if the 64 slots included in the 1.6 TE PHY are a slot 0 to a slot 63, respectively, the 32 slots corresponding to the 1^{st} overhead multiframe include the slot 0, a slot 1, a slot 2, ..., and a slot 31, and the 32 slots corresponding to the 2^{nd} overhead multiframe include a slot 32, a slot 33, a slot 34, ..., and the slot 63.

In embodiments of this application, the k slots included in the PHY link may be combined in different manners into the k/s slots that separately correspond to the i^{th} overhead multiframe, and a correspondence between the overhead multiframe and the slot is flexible.

In a possible implementation, for any overhead multiframe in the s overhead multiframes, the any overhead multiframe includes a plurality of overhead frames (overhead frames), and for at least one of the plurality of overhead frames, any overhead frame in the at least one overhead frame includes a mapping relationship between a slot and a service flow. For example, the plurality of overhead frames include an idle overhead frame or an overhead frame used as a reserved bit field, and the overhead frame used as a reserved bit field may carry information used for protocol extension. Because types of overhead frames are diversified, information included in the overhead multiframe is flexible. When the overhead multiframe includes an overhead frame used as a reserved bit field, the overhead frame can carry more abundant information, and the overhead multiframe has good scalability.

For example, for any overhead frame in the at least one overhead frame, the any overhead frame may include a plurality of overhead blocks (overhead blocks, OH blocks), and at least one overhead block in the plurality of overhead blocks includes a mapping relationship between a slot and a service flow.

In a possible implementation, for any overhead multiframe, a quantity of overhead frames included in the overhead multiframe is equal to a quantity of slots corresponding to the overhead multiframe. In other words, for an overhead multiframe, the overhead multiframe includes 32 overhead frames. For example, for any overhead frame in the 32 overhead frames, the overhead frame includes two overhead blocks. For any overhead block, the overhead block may be 257 bits. It should be noted that a quantity of overhead frames included in an overhead multiframe may alternatively be greater than a quantity of slots corresponding to the overhead multiframe. For example, the overhead multiframe includes 34 overhead frames. Herein, 32 overhead frames are overhead frames including a mapping relationship between a slot and a service flow, and the remaining two overhead frames are overhead frames used as reserved bit fields.

It may be learned from the foregoing content that the first device maps the plurality of code blocks to the at least one PHY link based on the coding scheme of the code blocks, so that the plurality of code blocks are transmitted over the at least one PHY link. The at least one PHY link may be further used to transmit s overhead multiframes. Any overhead multiframe may include 32 overhead frames, and any overhead frame may include two overhead blocks. In a possible implementation, for any PHY link in the at least one PHY link, a transmission order of transmitting the code blocks and the overhead multiframes over the any PHY link is: The s overhead blocks are transmitted over the PHY link every time n*k code blocks are transmitted. An r^{th} overhead block in the s overhead blocks forms an r^{th} overhead multiframe in the s overhead multiframes. Herein, n is a positive integer, and r is an integer greater than or equal to 0 and less than s, or r is an integer greater than 0 and less than or equal to s.

For example, for an 800 GE PHY, the 800 GE PHY includes 32 slots. An overhead block is transmitted every time n*32 code blocks are transmitted over the 800 GE PHY. The overhead block forms an overhead multiframe transmitted over the 800 GE PHY. For another example, for a 1.6 TE PHY, the 1.6 TE PHY includes 64 slots. Two overhead blocks are transmitted every time n*64 code blocks are transmitted over the 1.6 TE PHY. A 1^{st} overhead block forms a 1^{st} overhead multiframe, and a 2^{nd} overhead block forms a 2^{nd} overhead multiframe. For example, n is 639 or 1279.

In a possible implementation, for any PHY link, k slots included in the PHY link correspond to a calendar (calendar). The calendar includes a mapping relationship between at least one slot included in s overhead multiframes transmitted over the PHY link and at least one service flow. For example, for an 800 GE PHY, 32 slots included in the 800 GE PHY correspond to a calendar. The calendar includes a mapping relationship between 32 slots included in an overhead multiframe transmitted over the 800 GE PHY and at least one service flow. For another example, for a 1.6 TE PHY, 64 slots included in the 1.6 TE PHY correspond to a calendar. The calendar includes a mapping relationship between 64 slots included in two overhead multiframes transmitted over the 1.6 TE PHY and at least one service flow.

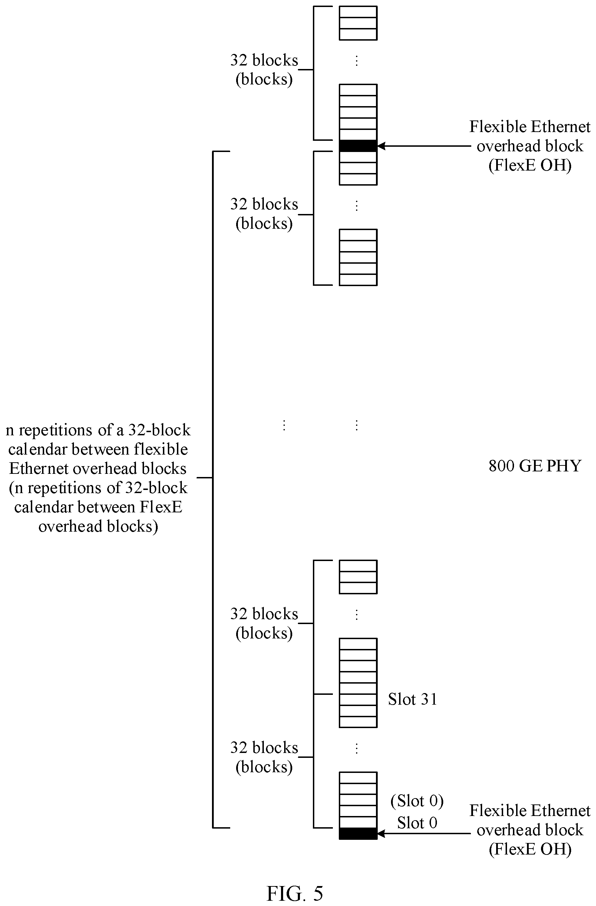

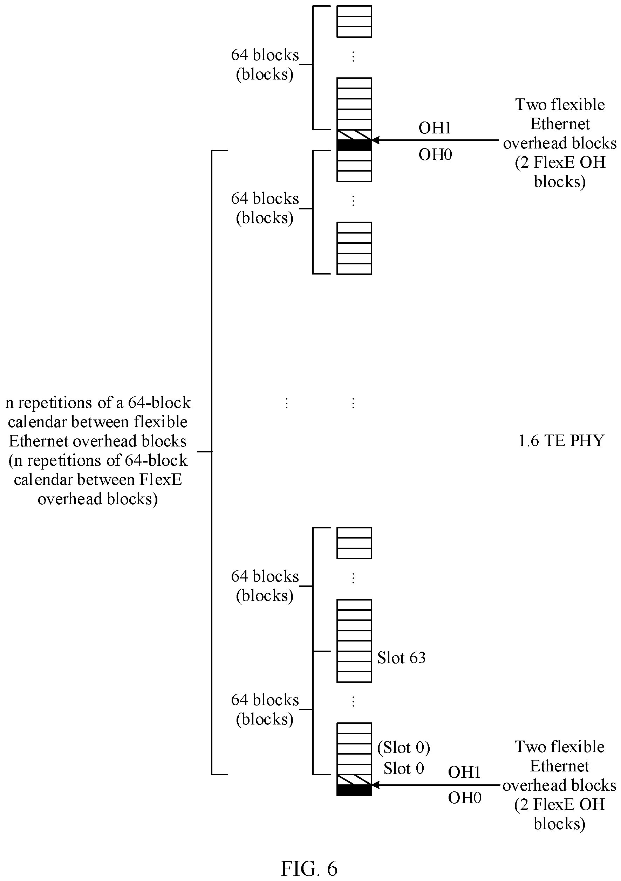

For example, when a slot is used to transmit a code block (block), 32 blocks are transmitted by cycling of the 32 slots included in the 800 GE PHY, and a calendar corresponding to the 32 slots included in the 800 GE PHY is referred to as a 32-block calendar (32-block calendar); and 64 blocks are transmitted by cycling of the 64 slots included in the 1.6 TE PHY, and a calendar corresponding to the 64 slots included in the 1.6 TE PHY is referred to as a 64-block calendar (64-block calendar). To be specific, for the 800 GE PHY, one overhead block is transmitted over the 800 GE PHY every n repetitions of the 32-block calendar corresponding to the 800 GE PHY For example, as shown in FIG. 5, for the 800 GE PHY, in a case of n repetitions of a 32-block calendar between flexible Ethernet overhead blocks (n repetitions of 32-block calendar between FlexE overheads blocks), the flexible Ethernet overhead (FlexE overhead, FlexE OH) blocks are the foregoing overhead blocks. For the 1.6 TE PHY, two overhead blocks are transmitted over the 1.6 TE PHY every n repetitions of a 64-block calendar corresponding to the 1.6 TE PHY. For example, as shown in FIG. 6, for the 1.6 TE PHY, in a case of n repetitions of a 64-block calendar between flexible Ethernet overhead blocks (n repetitions of 64-block calendar between FlexE overheads blocks), OH0 indicates the former overhead block in the two overhead blocks, and OH1 indicates the latter overhead block in the two overhead blocks.

For example, for the 800 GE PHY, every two overhead blocks form an overhead frame, and every 32 overhead frames form an overhead multiframe. For the 1.6 TE PHY, every two OH0s form an overhead frame, and every 32 overhead frames form a first overhead multiframe in two overhead multiframes; and every two OH1s form an overhead frame, and every 32 overhead frames form the latter overhead multiframe in the two overhead multiframes.

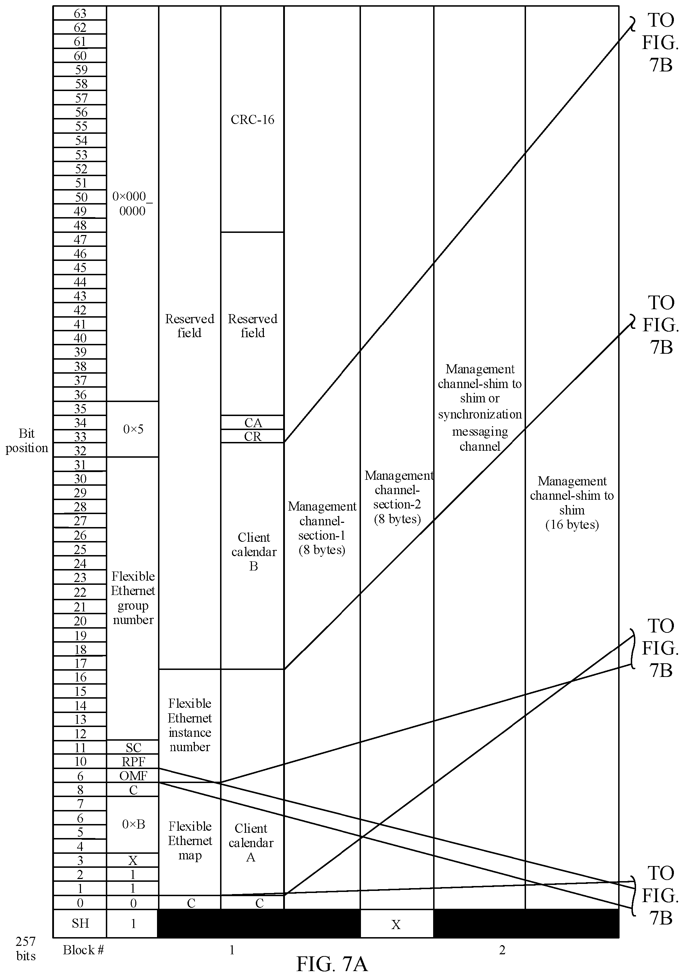

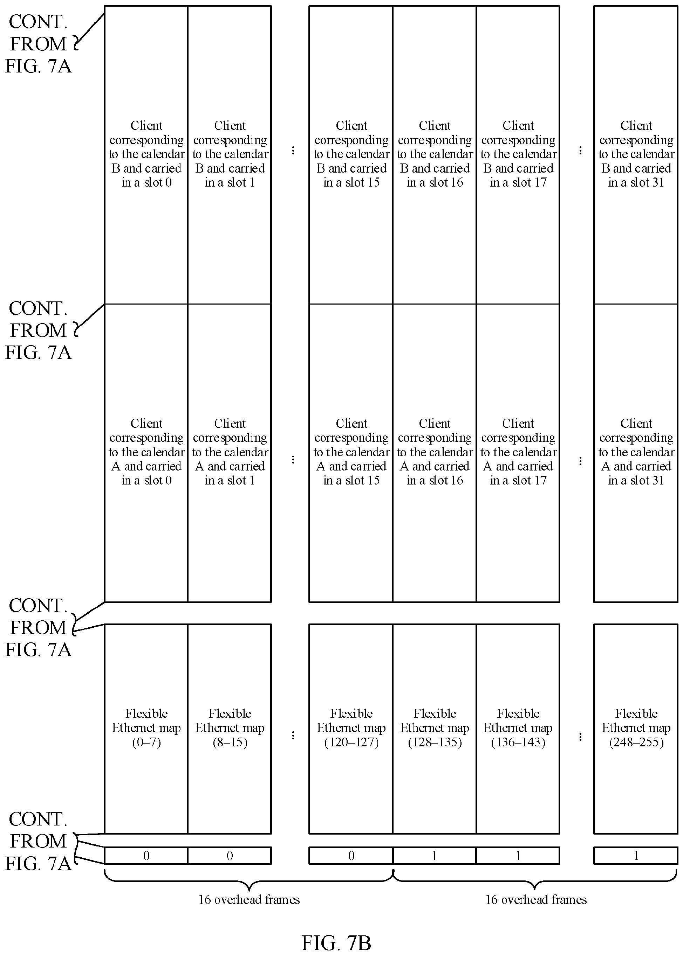

FIG. 7A and FIG. 7B are a diagram of a structure of an overhead frame and an overhead multiframe according to an embodiment of this application. As shown in FIG. 7A and FIG. 7B, the overhead frame and the overhead multiframe include but are not limited to the following 16 items:

### (1) Client calendar A (client calendar A) and client calendar B (client calendar B)

For example, the overhead frame includes two types of calendar configuration information, namely, the client calendar A and the client calendar B. The client calendar A may be referred to as a calendar A (calendar A) for short, and the client calendar B may be referred to as a calendar B (calendar B) for short. In the overhead frame shown in FIG. 7A and FIG. 7B, bit fields numbered 64*2+1=129 to 64*2+16=144 in a 1^{st} block carry the client calendar A, and bit fields numbered 64*2+17=145 to 64*2+32=160 carry the client calendar B.

For a 1^{st} overhead frame included in the overhead multiframe, the 1^{st} overhead frame includes a client carried in a slot 0 (client carried calendar A slot 0) when the calendar A is with a calendar configuration in use, and a client carried in the slot 0 (client carried calendar B slot 0) when the calendar B is with a calendar configuration in use. The client carried calendar A slot 0 is a mapping relationship between the slot 0 and a service flow, namely, a service flow that is mapped to the slot 0 for transmission, in at least one service flow, when the calendar A is with the calendar configuration in use. The client carried calendar A slot 0 may be referred to as a client corresponding to the calendar A and carried in the slot 0 for short. The client carried calendar B slot 0 is a service flow that is mapped to the slot 0 for transmission when the calendar B is with the calendar configuration in use. The client carried calendar B slot 0 may be referred to as a client corresponding to the calendar B and carried in the slot 0 for short. A principle of the remaining overhead frames in the overhead multiframe is the same as that of the 1^{st} overhead frame, and details are not described herein again.

Corresponding to different calendar configurations, mapping relationships between the slot 0 to a slot 31 and the at least one service flow are different. Therefore, the mapping relationships between the plurality of slots and the at least one service flow may be changed by switching the calendar A or the calendar B to be information about a calendar configuration in use. In this way, when the at least one service flow changes, the mapping relationships between the at least one service flow and the plurality of slots included in at least one PHY link can be correspondingly adjusted by switching between the calendar A and the calendar B, to ensure transmission of the at least one service flow. For example, when bandwidth of the at least one service flow increases, switching between the calendar A and the calendar B is performed. This can ensure that a plurality of code blocks included in the at least one service flow are all mapped to the plurality of slots included in the at least one PHY for transmission, thereby avoiding a traffic loss.

For example, the calendar A and the calendar B further have the following features:
Feature 1: Only one piece of calendar configuration information is in an in-use state at any time, that is, either the calendar A or the calendar B is in use at any time.
Feature 2: Between a transmit (transmit end, TX) end and a receive (receive end, RX) end within a FlexE group, a slot negotiation mechanism in a FlexE OH is used to ensure that calendar configuration information used by the TX end is consistent with that used by the RX end. For example, if the calendar A is in the in-use state, the calendar B is in a standby state.
Feature 3: The TX end initiates slot negotiation, and the RX end is in a passive receiving state. If the calendar A is in the in-use state, the TX end refreshes a changed calendar B to the RX end by using the FlexE OH. Subsequently, the TX end initiates a calendar switch request (calendar switch request, CR) slot negotiation request, to request to switch slot configuration information in use to the calendar B. After the TX end receives a response from the RX end, the TX end triggers both the TX end and the RX end to switch the slot configuration information in use to the calendar B. It should be noted that, after a connection is established for the first time between the TX end and the RX end that are connected to the FlexE group, slot negotiation of the FlexE OH is also triggered once, to ensure that slot configuration information in the in-use state at the two ends is consistent.

### (2) Calendar configuration in use (calendar configuration in use, C)

In the overhead frame shown in FIG. 7A and FIG. 7B, a bit field numbered 8, a bit field numbered 64*1+0=64, and a bit field numbered 64*2+0=128 in the 1^{st} block all carry the C. For example, when the calendar configuration in use is the calendar A, the C is 0. When the calendar configuration in use is the calendar B, the C is 1.

### (3) Calendar switch request (calendar switch request, CR)

The CR is used to request to switch the calendar configuration information in use. In the overhead frame shown in FIG. 7A and FIG. 7B, a bit field numbered 64*2+33=161 in the 1^{st} block carries the CR.

### (4) Calendar switch acknowledgment (calendar switch acknowledge, CA)

The CAis used to acknowledge switch of the calendar configuration information in use. In the overhead frame shown in FIG. 7A and FIG. 7B, a bit field numbered 64*2+34=162 in the 1^{st} block carries the CA.

### (5) Overhead multiframe indicator (overhead multiframe indicator, OMF)

The OMF indicates a boundary of an overhead multiframe. In the overhead frame shown in FIG. 7A and FIG. 7B, a bit field numbered 9 in the 1^{st} block carries the OMF. In a multiframe, values of OMFs of the first 16 overhead frames are 0, and values of OMFs of the last 16 overhead frames are 1. A boundary of the overhead multiframe may be determined through conversion between 0 and 1.

### (6) Remote physical layer fault (remote PHY fault, RPF)

The RPF indicates a remote physical layer fault. In the overhead frame shown in FIG. 7A and FIG. 7B, a bit field numbered 10 in the 1^{st} block carries the RPF.

### (7) Synchronization control (synchronization control, SC)

The SC is used to control an overhead frame to include a synchronization messaging channel. In the overhead frame shown in FIG. 7A and FIG. 7B, a bit field numbered 11 in the 1^{st} block carries the SC. When the SC is 0, bit fields numbered 64*1+0=64 to 64*1+63=127 in a 2^{nd} block in the overhead frame are used as a management channel-shim to shim. In other words, the overhead frame does not include a synchronization messaging channel. When the SC is 1, bit fields numbered 64*1+0=64 to 64*1+63=127 in a 2^{nd} block in the overhead frame are used as a synchronization messaging channel.

### (8) Synchronization messaging channel (synchronization messaging channel)

The synchronization messaging channel is used to carry a synchronization message. The synchronization message is used to enable a device that receives the synchronization message to perform synchronization based on the synchronization message. As described in (7), when the SC is 1, the bit fields numbered 64*1+0=64 to 64*1+63=127 in the 2^{nd} block in the overhead frame shown in FIG. 7A and FIG. 7B are used as the synchronization messaging channel.

### (9) Flexible Ethernet map (FlexE map)

For example, at least one PHY link used to transmit a code block included in the at least one service flow is referred to as a FlexE group. For any PHY link, the PHY link includes s flexible Ethernet instances (FlexE instances), and one FlexE instance includes k/s slots corresponding to one overhead multiframe. For example, for an 800 GE PHY, the 800 GE PHY includes one FlexE instance, and for a 1.6 TE PHY, the 1.6 TE PHY includes two FlexE instances. A 1^{st} FlexE instance includes 32 slots corresponding to a 1^{st} overhead multiframe, and a 2^{nd} FlexE instance includes 32 slots corresponding to a 2^{nd} overhead multiframe.

The FlexE map is used for control of which FlexE instances are members of this FlexE group (control of which FlexE instances are members of this group). In the overhead frame shown in FIG. 7A and FIG. 7B, bit fields numbered 64*1+1=65 to 64*1+8=72 in the 1^{st} block carry the FlexE map.

For example, the FlexE map includes information about a plurality of PHY links, each bit of the FlexE map corresponds to one PHY link, and a value of each bit of the FlexE map indicates whether the PHY link corresponding to the bit is in the FlexE group. For example, if a value of a bit is a first value, for example, the first value is 1, it is considered that a PHY link corresponding to the bit is in the FlexE group. If a value of a bit is a second value, for example, the second value is 0, it is considered that a PHY link corresponding to the bit is not in the FlexE group.

### (10) Flexible Ethernet instance number (FlexE instance number)

The FlexE instance number identifies a FlexE instance in the FlexE group (identity of this FlexE instance within the group). In the overhead frame shown in FIG. 7A and FIG. 7B, bit fields numbered 64*1+9=73 to 64*1+16=80 in the 1^{st} block carry the FlexE instance number. For example, each FlexE instance in the FlexE group has a unique identifier.

### (11) Flexible Ethernet group number (FlexE group number)

The FlexE group number identifies the FlexE group. In the overhead frame shown in FIG. 7A and FIG. 7B, bit fields numbered 12 to 31 in the 1^{st} block carry the FlexE group number.

### (12) Synchronization header (synchronization header, SH)

The SH is a frame header of a FlexE overhead frame.

### (13) Unknown bit (X)

In the overhead frame shown in FIG. 7A and FIG. 7B, a bit field numbered 3 in the 1^{st} block and a field under the SH in the 2^{nd} block carry the X. For example, a value of X corresponds to content in a management channel-section-1. For example, when the content in the management channel-section-1 is content of a control type, the X is 0. When the content in the management channel-section-1 is content of a data type, the X is 1. For another example, when the content in the management channel-section-1 is content of a control type, the X is 1. When the content in the management channel-section-1 is content of a data type, the X is 0.

### (14) Management channel (management channel)

For example, the management channel includes management information used to manage at least one PHY link. For example, the overhead frame includes two management channels-section (management channel-section), which are the management channel-section-1 and a management channel-section-2, respectively. The two management channels-section are both 8 bytes (bytes), and the management channel-section-1 and the management channel-section-2 are both used for section-to-section management (section-to-section management). In the overhead frame shown in FIG. 7A and FIG. 7B, bit fields numbered 64*3+0=192 to 64*3+63=255 in the 1^{st} block carry the management channel-section-1, and bit fields numbered 0 to 63 in the 2^{nd} block carry the management channel-section-2.

For example, when the SC is 0, the overhead frame includes a management channel-shim to shim (management channel-shim to shim), and the management channel-shim to shim is used to carry shim-to-shim management information. When the SC is 0, bit fields numbered 64*1+0=64 to 64*1+63=127 in the 2^{nd} block in the overhead frame shown in FIG. 7A and FIG. 7B are used as the management channel-shim to shim.

In a possible implementation, the management channel is further used to carry another packet. For example, the management channel is further used to carry a link layer discovery protocol (link layer discovery protocol, LLDP) packet or a management packet.

### (15) Cyclic redundancy check-16 (cyclic redundancy check, CRC-16)

The CRC-16 is used to perform CRC protection on content of an overhead block. For example, the CRC-16 is used to check content that is before a bit field where the CRC-16 resides and that is other than content of first 9 bits and content of a 32^{nd} bit to a 35^{th} bit. In the overhead frame shown in FIG. 7A and FIG. 7B, bit fields numbered 64*2+48=176 to 64*2+63=191 in the 1^{st} block carry the CRC-16.

### (16) Reserved (reserved) field

In the overhead frame shown in FIG. 7A andFIG. 7B, bit fields numbered 64*1+17=81 to 64*1+63=127 and bit fields numbered 64*2+35=163 to 64*2+47=175 in the 1^{st} block are all reserved fields. For example, the reserved field is used as an extension field that carries information.

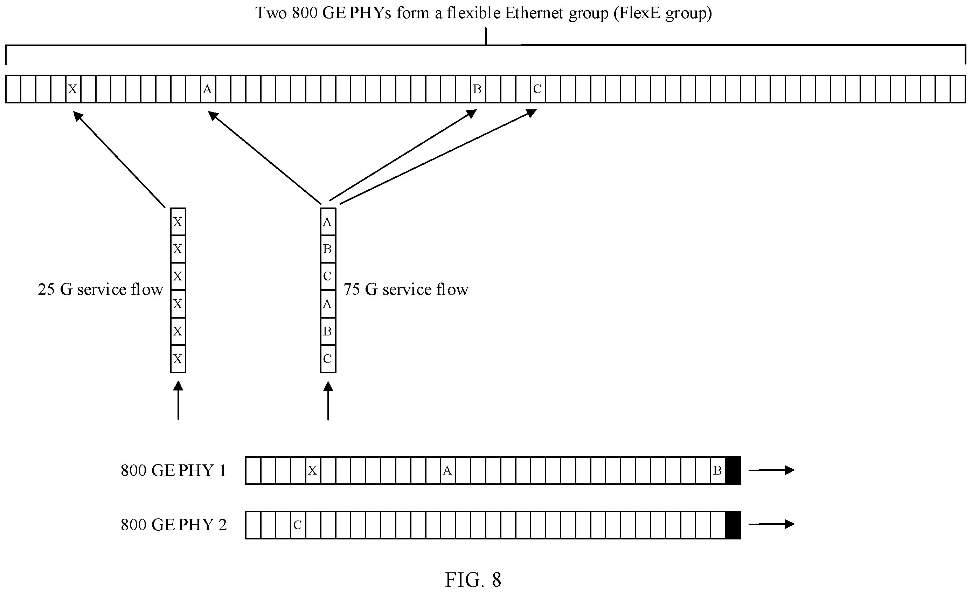

A plurality of code blocks included in at least one service flow are mapped to at least one PHY link, so that the plurality of code blocks can be transmitted by using the plurality of slots included in the at least one PHY link. For example, for any service flow, a sum of rates of slots used to transmit code blocks in the service flow is equal to a rate of the service flow. For example, FIG. 8 is a diagram of transmitting a code block included in a service flow over a PHY link according to an embodiment of this application. As shown in FIG. 8, a first device obtains two service flows. One service flow is a 25 G (G) service flow, that is, a rate of the service flow is 25 Gbps, and the other service flow is a 75 G service flow, that is, a rate of the service flow is 75 Gbps. The first device maps code blocks included in the two service flows to a FlexE group including two 800 GE PHYs. Rates of slots of the two 800 GE PHYs are both 25 Gbps. In this case, the 25 G service flow corresponds to one slot, and the 75 G service flow corresponds to three slots. For example, code blocks included in the 25 G service flow are mapped to a slot 4 of an 800 GE PHY 1 for transmission, and code blocks included in the 75 G service flow is mapped to a slot 13 of the 800 GE PHY 1, a slot 31 of the 800 GE PHY 1, and a slot 3 of an 800 GE PHY 2 for transmission. A black block shown in FIG. 8 is an overhead block.

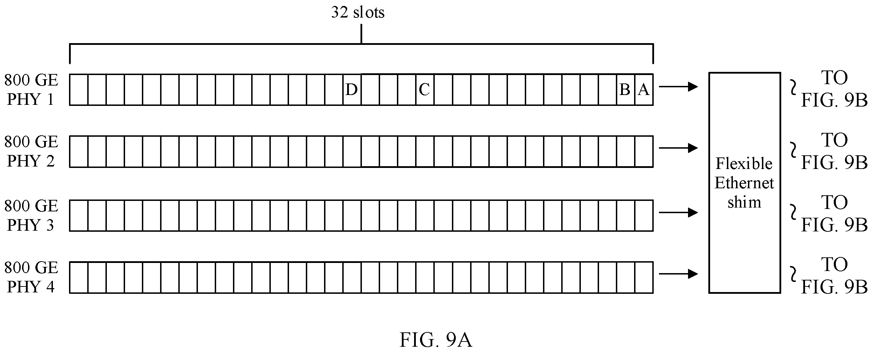

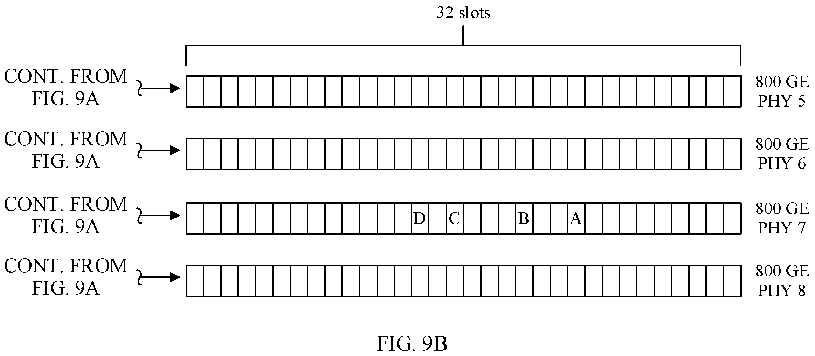

In a possible implementation, the at least one service flow is a service flow transmitted over at least one PHY link. Mapping the plurality of code blocks to the at least one PHY link includes: obtaining an overhead multiframe corresponding to the at least one service flow; and modifying the overhead multiframe, and mapping the plurality of code blocks to the at least one PHY link based on a modified overhead multiframe. The overhead multiframe is modified, so that a mapping relationship between the slot included in the at least one PHY link and the at least one service flow can be modified. In this way, the code blocks included in the service flow can be switched to different PHY links for transmission. For example, FIG. 9A and FIG. 9B are a diagram of a process of mapping a plurality of code blocks according to an embodiment of this application. As shown in FIG. 9A and FIG. 9B, a first device receives a 100 G service flow transmitted over a FlexE group including an 800 GE PHY 1, an 800 GE PHY 2, an 800 GE PHY 3, and an 800 GE PHY 4. Each of the 800 GE PHY 1, the 800 GE PHY 2, the 800 GE PHY 3, and the 800 GE PHY 4 includes 32 slots. A code block A, a code block B, a code block C, and a code block D included in the 100 G service flow are transmitted over the 800 GE PHY 1. The first device obtains an overhead multiframe corresponding to the 100 G service flow, modifies the overhead multiframe, and maps, based on a modified overhead multiframe, the code block A, the code block B, the code block C, and the code block D to a FlexE group including an 800 GE PHY 5, an 800 GE PHY 6, an 800 GE PHY 7, and an 800 GE PHY 8. Specifically, each of the 800 GE PHY 5, the 800 GE PHY 6, the 800 GE PHY 7, and the 800 GE PHY 8 includes 32 slots. The first device maps the code block A, the code block B, the code block C, and the code block D to the 800 GE PHY 7, so that the code block A, the code block B, the code block C, and the code block D can be transmitted over the 800 GE PHY 7.

It should be noted that, PHY links for transmitting code blocks of a service flow may be the same or different, code blocks included in a same service flow may be mapped to a same PHY link or different PHY links, and a mapping relationship between a plurality of code blocks included in at least one PHY link and at least one service flow is flexible. For example, the first device receives the 100 G service flow transmitted over the FlexE group including the 800 GE PHY 1, the 800 GE PHY 2, the 800 GE PHY 3, and the 800 GE PHY 4, and maps the code blocks included in the 100 G service flow to a FlexE group including a 1.6 TE PHY 1 and a 1.6 TE PHY 2. For another example, the code block A, the code block B, the code block C, and the code block D included in the 100 G service flow are transmitted over the 800 GE PHY 1. The first device maps the code block A, the code block B, and the code block C to the 800 GE PHY 7, and maps the code block D to the 800 GE PHY 8. For another example, the code block A, the code block B, and the code block C included in the 100 G service flow are transmitted over the 800 GE PHY 1, and the code block D is transmitted over an 800 GE PHY 2. The first device maps the code block A, the code block B, and the code block C to the 800 GE PHY 7, and maps the code block D to the 800 GE PHY 8. For another example, the code block A, the code block B, and the code block C included in the 100 G service flow are transmitted over the 800 GE PHY 1, and the code block D is transmitted over the 800 GE PHY 2. The first device maps the code block A, the code block B, the code block C, and the code block D to the 800 GE PHY 7.

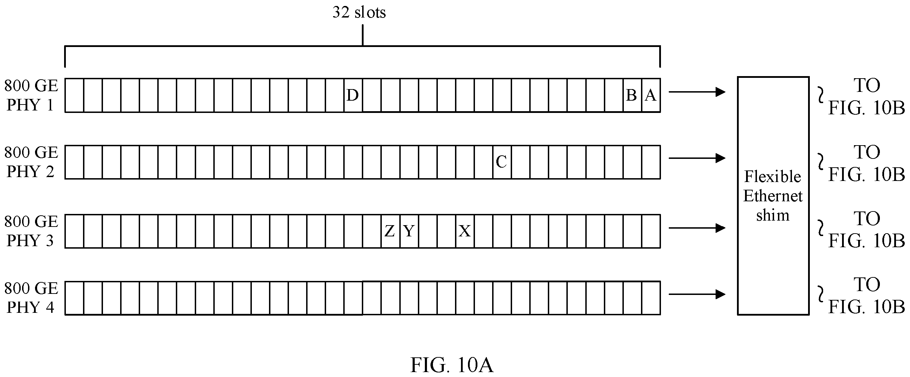

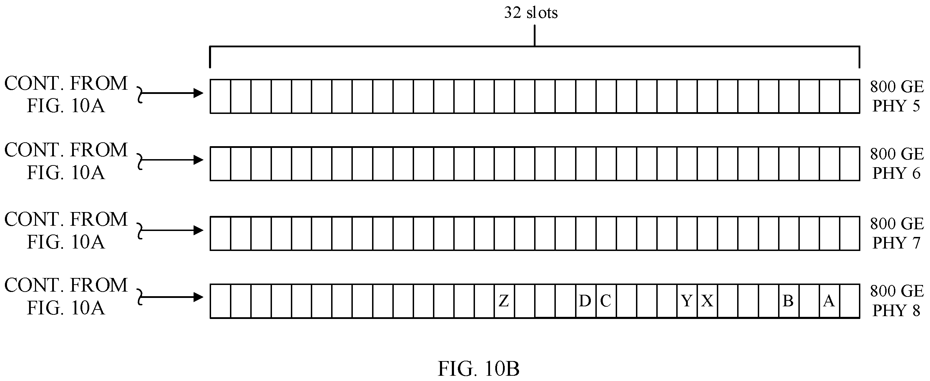

For example, by modifying the overhead multiframe, the first device maps code blocks included in different service flows to a same PHY link. For example, FIG. 10A and FIG. 10B are a diagram of another process of mapping a plurality of code blocks according to an embodiment of this application. As shown in FIG. 10A and FIG. 10B, a first device receives a 100 G service flow and a 75 G service flow that are transmitted over a FlexE group including an 800 GE PHY 1, an 800 GE PHY 2, an 800 GE PHY 3, and an 800 GE PHY 4. Each of the 800 GE PHY 1, the 800 GE PHY 2, the 800 GE PHY 3, and the 800 GE PHY 4 includes 32 slots. A code block A, a code block B, and a code block D included in the 100 G service flow are transmitted over the 800 GE PHY 1, a code block C included in the 100 G service flow is transmitted over the 800 GE PHY 2, and a code block X, a code block Y, and a code block Z included in the 75 G service flow are transmitted over the 800 GE PHY 3. The first device obtains an overhead multiframe corresponding to the 100 G service flow and an overhead multiframe corresponding to the 75 G service flow, modifies the overhead multiframe corresponding to the 100 G service flow and the overhead multiframe corresponding to the 75 G service flow, and maps, based on modified overhead multiframes, the code block A, the code block B, the code block C, the code block D, the code block X, the code block Y, and the code block Z to a FlexE group including an 800 GE PHY 5, an 800 GE PHY 6, an 800 GE PHY 7, and an 800 GE PHY 8. Specifically, each of the 800 GE PHY 5, the 800 GE PHY 6, the 800 GE PHY 7, and the 800 GE PHY 8 includes 32 slots. The first device maps the code block A, the code block B, the code block C, the code block D, the code block X, the code block Y, and the code block Z to the 800 GE PHY 8.

In a possible implementation, the plurality of code blocks included in the at least one service flow include a code block of a data type and a code block of an idle type. Mapping the plurality of code blocks to at least one PHY link includes: replacing at least one code block of the idle type in the plurality of code blocks with a code block including operation administration and maintenance (operation administration and maintenance, OAM) information, where the OAM information is used to manage the code block of the data type in the plurality of code blocks; and mapping a plurality of code blocks obtained after replacement to the at least one PHY link. For example, the code block of the data type includes a code block including only data and a code block including a control word. The at least one code block of the idle type is replaced with the code block including the OAM information, so that a more refined operation can be performed on the code block of the data type. For example, based on the OAM information, a service flow is divided into a plurality of sub-flows, and operations are separately performed on code blocks included in the plurality of sub-flows. Alternatively, an overhead frame is further defined as a plurality of subframes based on the OAM information, and a slot is multiplexed based on the subframes. For example, a slot is divided into a plurality of sub-slots based on the subframes, and a plurality of code blocks included in at least one service flow are transmitted based on the plurality of sub-slots.

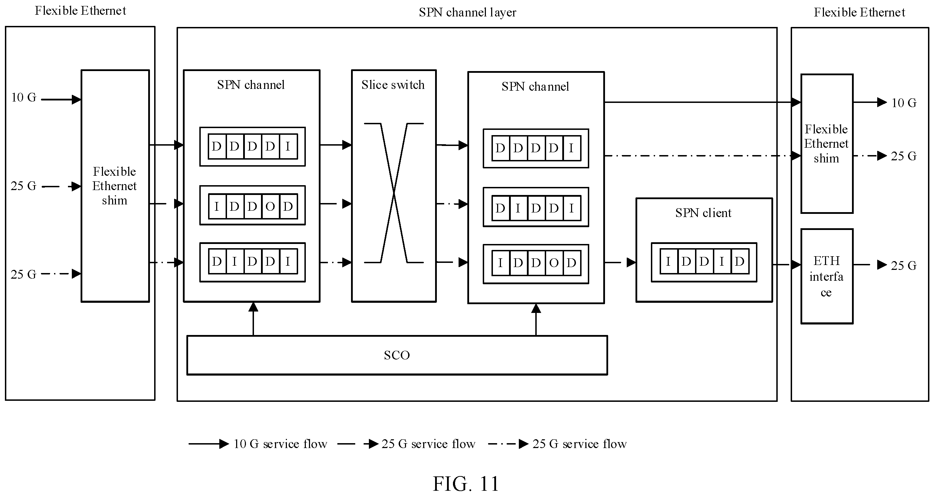

In a possible implementation, the data processing method provided in embodiments of this application may be further combined with a slicing packet network (slicing packet network, SPN) technology. The first device has a function of a slicing packet network channel overhead (SPN channel overhead, SCO) processor. For example, FIG. 11 is a diagram of still another process of mapping a plurality of code blocks according to an embodiment of this application. As shown in FIG. 11, the first device receives one 10 G service flow and two 25 G service flows. Both the 10 G service flow and the 25 G service flow include a plurality of code blocks. The code block includes a data unit and a type of a single-bit length, or the code block includes a type, a type indication, and code block content. At an SPN channel layer (SPN channel layer), the first device transmits, over different SPN channels (SPN channels), the code blocks included in the 10 G service flow and the 25 G service flows. D indicates a code block of a data type, I indicates a code block of an idle type, and O indicates a code block including OAM management information. Based on a coding scheme of the code blocks, the first device exchanges slices. For example, as shown in FIG. 11, based on a coding scheme of the code blocks, the first device exchanges SPN channels over which the code blocks included in the two 25 G service flows are transmitted. The first device obtains an SPN client (SPN client) based on the code blocks included in one of the 25 G service flows, transmits the code blocks included in the 25 G service flow to an Ethernet (Ethernet, ETH) interface, and maps the code blocks included in the other 25 G service flow and the code blocks included in the 10 G service flow to at least one PHY link, to transmit, over the at least one PHY link, the plurality of code blocks included in the 10 G service flow and the plurality of code blocks included in the 25 G service flow.

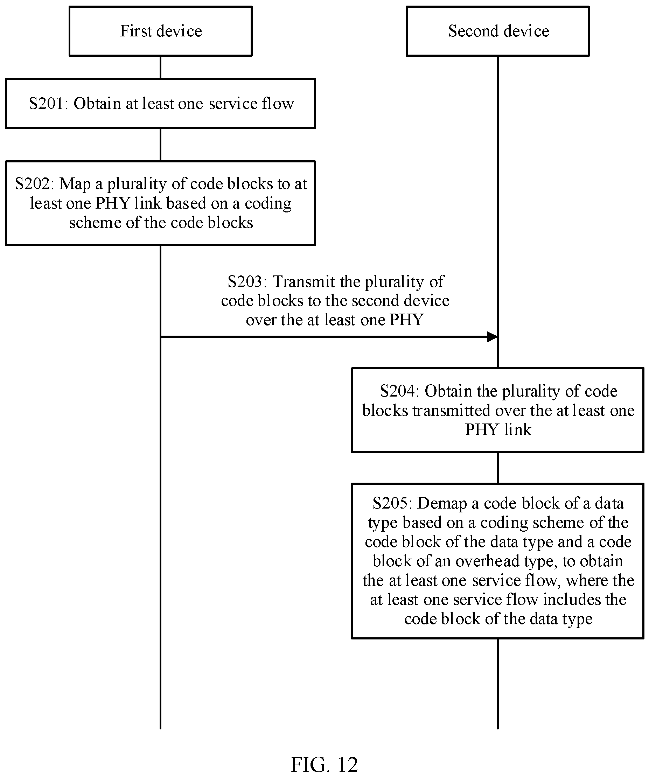

In a possible implementation, with reference to FIG. 12, the method further includes: S203: The first device transmits the plurality of code blocks to a second device over the at least one PHY.

For example, the first device and the second device are devices at two ends of a FlexE group, and the first device transmits the plurality of code blocks to the second device over the at least one PHY included in the FlexE group.

According to the method provided in embodiments of this application, FlexE that is based on a code block including a data unit and a type can be implemented, or FlexE that is based on a code block including a type, a type indication, and code block content can be implemented. When a rate of the slot included in the PHY link is 5m Gbps, the code block included in the at least one service flow can be transmitted at a high rate. In addition, the overhead multiframe is modified, so that the mapping relationship between the at least one slot included in the PHY link and the at least one service flow can be controlled. In this way, the code block included in the service flow can be transmitted in a specified slot, and a transmission carrier of the code block in the service flow is more flexible. In addition, the idle code block is replaced with the code block including the OAM management information. According to this method, the code block of the data type can be managed more precisely, and a transmission manner of the code block is more flexible.

Embodiments of this application provide a data processing method. For example, the method is applied to the second device. With reference to FIG. 12, the method includes but is not limited to the following S204 and S205.

S204: The second device obtains the plurality of code blocks transmitted over the at least one PHY link.

In an example embodiment of this application, the plurality of code blocks include a code block of an overhead type and a code block of a data type, and the code block of the data type includes a data unit and a type, or the code block of the data type includes a type, a type indication, and code block content.

In a possible implementation, the first device and the second device are devices at two ends of a FlexE group. To be specific, the second device receives the plurality of code blocks transmitted by the first device over the at least one PHY For example, the code block of the data type is a code block coded based on 256B/257B coding. In other words, the code block is 257 bits. The code block of the overhead type is the overhead block in the embodiment in the foregoing FIG. 2, and the overhead block is 257 bits.

S205: The second device demaps the code block of the data type based on a coding scheme of the code block of the data type and the code block of the overhead type, to obtain the at least one service flow, where the at least one service flow includes the code block of the data type.

In a possible implementation, the second device demaps, based on the 256B/257B coding scheme and the overhead block, the code block of the data type, to obtain the at least one service flow. For example, the second device restores the overhead frame based on the received overhead block, and restores the overhead multiframe based on the overhead frame. For example, the second device demaps, based on a mapping relationship between at least one slot included in the overhead multiframe and the at least one service flow, the code block of the data type from a slot of the at least one PHY link, to obtain the at least one service flow.

According to the method provided in embodiments of this application, FlexE that is based on the code block including the data unit and the type can be implemented, or FlexE that is based on the code block including the type, the type indication, and the code block content can be implemented.

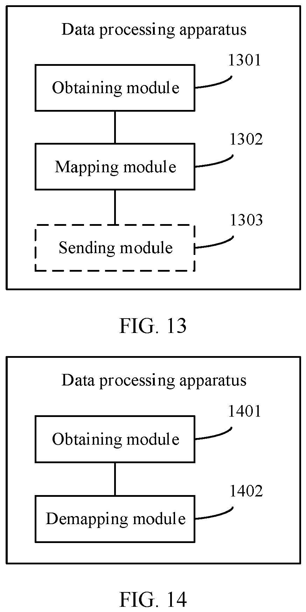

FIG. 13 is a diagram of a structure of a data processing apparatus according to an embodiment of this application. The apparatus is used for a first device. The first device is the first device shown in the foregoing FIG. 2 and FIG. 12. Based on a plurality of modules shown in FIG. 13 below, the data processing apparatus shown in FIG. 13 can perform all or some operations performed by the first device. It should be understood that the apparatus may include more additional modules than the shown modules, or some of the shown modules are omitted. This is not limited in embodiments of this application. As shown in FIG. 13, the apparatus includes:
an obtaining module 1301, configured to obtain at least one service flow, where any service flow in the at least one service flow includes a plurality of code blocks, and the code block includes a data unit and a type, or the code block includes a type, a type indication, and code block content; and
a mapping module 1302, configured to map the plurality of code blocks to at least one physical layer PHY link based on a coding scheme of the code block, where the at least one PHY link is used to transmit the plurality of code blocks.

In a possible implementation, any PHY link in the at least one PHY link includes at least one slot, the any PHY link in the at least one PHY link is further used to transmit s overhead multiframes, a format of the s overhead multiframes is determined based on the coding scheme, the s overhead multiframes include a mapping relationship between the at least one slot and the at least one service flow, the mapping relationship is used to map the plurality of code blocks to the PHY link, and s is determined based on a transmission rate of the PHY link.

In a possible implementation, a rate of the slot is 5m Gbps, one slot is used to transmit one code block, and m is an integer greater than 1.

In a possible implementation, any overhead multiframe in the s overhead multiframes includes a plurality of overhead frames, and for at least one overhead frame in the plurality of overhead frames, any overhead frame in the at least one overhead frame includes a mapping relationship between a slot and a service flow.

In a possible implementation, for the any overhead frame in the at least one overhead frame, the any overhead frame includes a plurality of overhead blocks, and at least one overhead block in the plurality of overhead blocks includes the mapping relationship between the slot and the service flow.

In a possible implementation, the any overhead multiframe includes 32 overhead frames, and one overhead frame includes two overhead blocks.

In a possible implementation, the any PHY link includes k slots, for the any overhead multiframe in the s overhead multiframes, the overhead multiframe includes mapping relationships between k/s slots and the at least one service flow, k is determined based on a ratio of the transmission rate of the PHY link to the rate of the slot, and k is an integer multiple of s.

In a possible implementation, every s slots in the k slots are a slot group, k/s slots corresponding to an i^{th} overhead multiframe in the s overhead multiframes include i^{th} slots in all slot groups, and i is an integer greater than or equal to 0 and less than s, or i is an integer greater than 0 and less than or equal to s.

In a possible implementation, every k/s slots in the k slots are a slot group, k/s slots corresponding to an i^{th} overhead multiframe in the s overhead multiframes include slots included in an i^{th} slot group, and i is an integer greater than or equal to 0 and less than s, or i is an integer greater than 0 and less than or equal to s.

In a possible implementation, the any PHY link is used to transmit s overhead blocks every time n*k code blocks are transmitted, an r^{th} overhead block in the s overhead blocks forms an r^{th} overhead multiframe in the s overhead multiframes, n is a positive integer, and r is an integer greater than or equal to 0 and less than s, or r is an integer greater than 0 and less than or equal to s.

In a possible implementation, the mapping module 1302 is configured to: obtain an overhead multiframe corresponding to the at least one service flow, and modify the overhead multiframe, and map the plurality of code blocks to the at least one PHY link based on a modified overhead multiframe.

In a possible implementation, the plurality of code blocks include a code block of a data type and a code block of an idle type, and the mapping module 1302 is configured to: replace at least one code block of the idle type in the plurality of code blocks with a code block including operation administration and maintenance OAM information, where the OAM information is used to manage the code block of the data type in the plurality of code blocks; and map a plurality of code blocks obtained after replacement to the at least one PHY link.

In a possible implementation, the any overhead multiframe in the s overhead multiframes further includes at least two management channels, and the management channel includes management information used to manage the at least one PHY link.

In a possible implementation, m is 4 or 5.

In a possible implementation, both the overhead block and the code block are 257 bits.

In a possible implementation, n is 639 or 1279.

In a possible implementation, the apparatus further includes a sending module 1303, configured to transmit the plurality of code blocks to a second device over the at least one PHY.

According to the apparatus provided in embodiments of this application, FlexE that is based on the code block including the data unit and the type can be implemented, or FlexE that is based on the code block including the type, the type indication, and the code block content can be implemented. When a rate of the slot included in the PHY link is 5m Gbps, the code block included in the at least one service flow can be transmitted at a high rate. In addition, the overhead multiframe is modified, so that the mapping relationship between the at least one slot included in the PHY link and the at least one service flow can be controlled. In this way, the code block included in the service flow can be transmitted in a specified slot, and a transmission carrier of the code block in the service flow is more flexible. In addition, the idle code block is replaced with the code block including the OAM management information. According to this apparatus, the code block of the data type can be managed more precisely, and a transmission manner of the code block is more flexible.

FIG. 14 is a diagram of a structure of a data processing apparatus according to an embodiment of this application. The apparatus is used for a second device, and the second device is the second device shown in the foregoing FIG. 12. Based on a plurality of modules shown in FIG. 14 below, the data processing apparatus shown in FIG. 14 can perform all or some operations performed by the second device. It should be understood that the apparatus may include more additional modules than the shown modules, or some of the shown modules are omitted. This is not limited in embodiments of this application. As shown in FIG. 14, the apparatus includes:
an obtaining module 1401, configured to obtain a plurality of code blocks transmitted over at least one PHY link, where the plurality of code blocks include a code block of an overhead type and a code block of a data type, and the code block of the data type includes a data unit and a type, or the code block of the data type includes a type, a type indication, and code block content; and
a demapping module 1402, configured to demap the code block of the data type based on a coding scheme of the code block of the data type and the code block of the overhead type, to obtain at least one service flow, where the at least one service flow includes the code block of the data type.

According to the apparatus provided in embodiments of this application, FlexE that is based on the code block including the data unit and the type can be implemented, or FlexE that is based on the code block including the type, the type indication, and the code block content can be implemented.

It should be understood that, when the apparatuses provided in FIG. 13 and FIG. 14 implement functions of the apparatuses, division into the foregoing functional modules is merely used as an example for description. During actual application, the foregoing functions may be allocated to different functional modules for implementation based on a requirement. In other words, an internal structure of a device is divided into different functional modules, to implement all or some of the functions described above. In addition, the apparatuses provided in the foregoing embodiments and the method embodiments pertain to a same concept. For specific implementation processes thereof, refer to the method embodiments. Details are not described herein again.

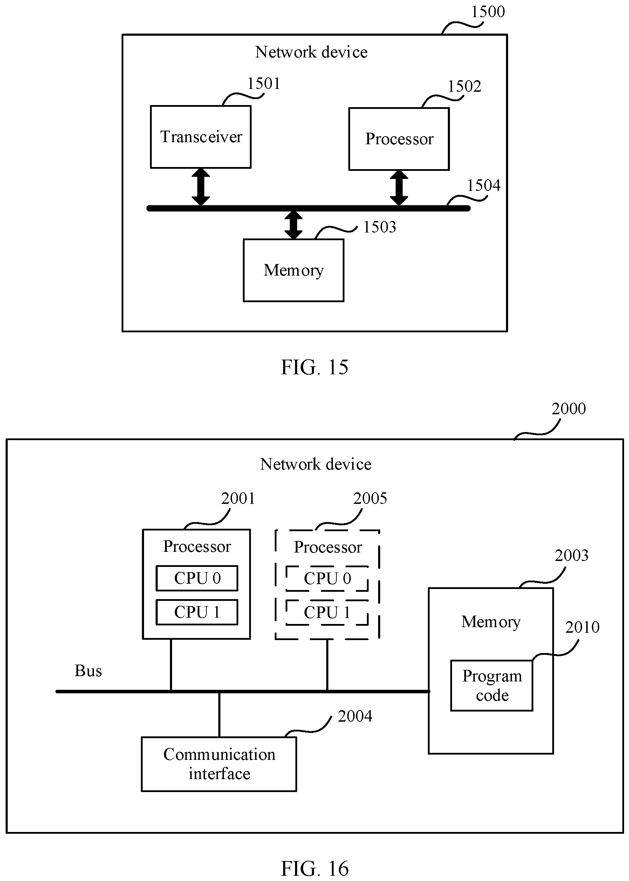

For a specific hardware structure of the device in the foregoing embodiments, refer to a network device 1500 shown in FIG. 15. The network device 1500 includes a transceiver 1501, a processor 1502, and a memory 1503. The transceiver 1501, the processor 1502, and the memory 1503 are connected to each other through a bus 1504. The transceiver 1501 is configured to obtain at least one service flow and transmit a plurality of code blocks. The memory 1503 is configured to store instructions or program code. The processor 1502 is configured to invoke the instructions or the program code in the memory 1503, to enable the device to perform related processing steps of the first device or the second device in the foregoing method embodiments. In a specific embodiment, the network device 1500 in an embodiment of this application may correspond to the first device or the second device in the foregoing method embodiments. The processor 1502 in the network device 1500 reads the instructions or the program code in the memory 1503, to enable the network device 1500 shown in FIG. 15 to perform all or some operations performed by the first device or the second device.

The network device 1500 may further correspond to the apparatuses shown in the foregoing FIG. 13 and FIG. 14. For example, the obtaining module 1301, the sending module 1303, and the obtaining module 1401 in FIG. 13 and FIG. 14 are equivalent to the transceiver 1501, and the mapping module 1302 and the demapping module 1402 are equivalent to the processor 1502.

FIG. 16 is a diagram of a structure of a network device 2000 according to an example embodiment of this application. The network device 2000 shown in FIG. 16 is configured to perform operations related to the data processing methods shown in the foregoing FIG. 2 and FIG. 12. The network device 2000 is, for example, a switch or a router.

As shown in FIG. 16, the network device 2000 includes at least one processor 2001, a memory 2003, and at least one communication interface 2004.

The processor 2001 is, for example, a general-purpose central processing unit (central processing unit, CPU), a digital signal processor (digital signal processor, DSP), a network processor (network processor, NP), a graphics processing unit (graphics processing unit, GPU), a neural-network processing unit (neural-network processing unit, NPU), a data processing unit (data processing unit, DPU), a microprocessor, or one or more integrated circuits configured to implement the solutions of this application. For example, the processor 2001 includes an application-specific integrated circuit (application-specific integrated circuit, ASIC), a programmable logic device (programmable logic device, PLD), or another programmable logic device, a transistor logic device, a hardware component, or any combination thereof. The PLD is, for example, a complex programmable logic device (complex programmable logic device, CPLD), a field-programmable gate array (field-programmable gate array, FPGA), a generic array logic (generic array logic, GAL), or any combination thereof. The processor may implement or execute various logical blocks, modules, and circuits described with reference to the content disclosed in embodiments of the present invention. Alternatively, the processor may be a combination of processors implementing a computing function, for example, a combination of one or more microprocessors, or a combination of a DSP and a microprocessor.

Optionally, the network device 2000 further includes a bus. The bus is configured to transmit information between components of the network device 2000. The bus may be a peripheral component interconnect (peripheral component interconnect, PCI for short) bus, an extended industry standard architecture (extended industry standard architecture, EISA for short) bus, or the like. Buses may be classified into an address bus, a data bus, a control bus, and the like. For ease of representation, only one thick line indicates the bus in FIG. 16, but this does not mean that there is only one bus or only one type of bus. In addition to being connected through the bus, the components of the network device 2000 in FIG. 16 may alternatively be connected in another manner. A manner in which the components are connected is not limited in embodiments of the present invention.

The memory 2003 is, for example, a read-only memory (read-only memory, ROM) or another type of static storage device that can store static information and instructions, for another example, a random-access memory (random-access memory, RAM) or another type of dynamic storage device that can store information and instructions, for another example, an electrically erasable programmable read-only memory (electrically erasable programmable read-only Memory, EEPROM), a compact disc read-only memory (compact disc read-only memory, CD-ROM) or another optical disk storage, an optical disk storage (including a compact disc, a laser disc, an optical disc, a digital versatile disc, a Blu-ray disc, and the like), a magnetic disk storage medium or another magnetic storage device, or any other medium that can be used to carry or store desired program code in a form of instructions or data structure and that can be accessed by a computer, but is not limited thereto. For example, the memory 2003 exists independently, and is connected to the processor 2001 through the bus. Alternatively, the memory 2003 and the processor 2001 may be integrated together.

The communication interface 2004 uses any apparatus such as a transceiver, and is configured to communicate with another device or a communication network. The communication network may be an Ethernet, a radio access network (RAN), a wireless local area network (wireless local area network, WLAN), or the like. The communication interface 2004 may include a wired communication interface, and may further include a wireless communication interface. Specifically, the communication interface 2004 may be an Ethernet (Ethernet) interface, a fast Ethernet (fast Ethernet, FE) interface, a gigabit Ethernet (gigabit Ethernet, GE) interface, an asynchronous transfer mode (asynchronous transfer mode, ATM) interface, a wireless local area network (wireless local area network, WLAN) interface, a cellular network communication interface, or a combination thereof. The Ethernet interface may be an optical interface, an electrical interface, or a combination thereof. In embodiments of this application, the communication interface 2004 may be used by the network device 2000 to communicate with another device.

During specific implementation, in an embodiment, the processor 2001 may include one or more CPUs, for example, a CPU 0 and a CPU 1 shown in FIG. 16. Each of the processors may be a single-core processor (single-CPU), or may be a multi-core processor (multi-CPU). The processor herein may be one or more devices, circuits, and/or processing cores configured to process data (for example, computer program instructions).

During specific implementation, in an embodiment, the network device 2000 may include a plurality of processors, for example, the processor 2001 and a processor 2005 in FIG. 16. Each of the processors may be a single-core processor (single-CPU) or may be a multi-core processor (multi-CPU). The processor herein may be one or more devices, circuits, and/or processing cores configured to process data (for example, computer program instructions).

During specific implementation, in an embodiment, the network device 2000 may further include an output device and an input device. The output device communicates with the processor 2001, and may display information in a plurality of manners. For example, the output device may be a liquid crystal display (liquid crystal display, LCD), a light emitting diode (light emitting diode, LED) display device, a cathode ray tube (cathode ray tube, CRT) display device, or a projector (projector). The input device communicates with the processor 2001, and may receive an input from a user in a plurality of manners. For example, the input device may be a mouse, a keyboard, a touchscreen device, or a sensing device.

In some embodiments, the memory 2003 is configured to store program code 2010 for executing the solutions of this application, and the processor 2001 may execute the program code 2010 stored in the memory 2003. In other words, the network device 2000 may implement, by using the processor 2001 and the program code 2010 in the memory 2003, the data processing methods provided in the method embodiments. The program code 2010 may include one or more software modules. Optionally, the processor 2001 may also store program code or instructions for executing the solutions of this application.

In a specific embodiment, the network device 2000 in an embodiment of this application may correspond to the first device or the second device in the foregoing method embodiments. The processor 2001 in the network device 2000 reads the program code 2010 in the memory 2003 or the program code or the instruction stored in the processor 2001, to enable the network device 2000 shown in FIG. 16 to perform all or some operations performed by the first device or the second device.

The network device 2000 may further correspond to the apparatuses shown in the foregoing FIG. 13 and FIG. 14. Each functional module in the apparatuses shown in FIG. 13 and

FIG. 14 is implemented by software of the network device 2000. In other words, the functional module included in the apparatuses in FIG. 13 and FIG. 14 is generated after the processor 2001 of the network device 2000 reads the program code 2010 stored in the memory 2003. For example, the obtaining module 1301, the sending module 1303, and the obtaining module 1401 in FIG. 13 and FIG. 14 are equivalent to the communication interface 2004, and the mapping module 1302 and the demapping module 1402 are equivalent to the processor 2001 and/or the processor 2005.

Steps of the methods in FIG. 2 and FIG. 12 are completed by using an integrated logic circuit of hardware in a processor of the network device 2000, or by using instructions in a form of software. The steps of the method disclosed with reference to embodiments of this application may be directly performed by a hardware processor, or may be performed by using a combination of hardware in the processor and a software module. The software module may be located in a mature storage medium in the art, for example, a random-access memory, a flash memory, a read-only memory, a programmable read-only memory, an electrically erasable programmable memory, or a register. The storage medium is located in the memory. The processor reads information in the memory, and completes the steps of the foregoing methods in combination with hardware of the processor. To avoid repetition, details are not described herein again.

Based on the network devices shown in the foregoing FIG. 15 and FIG. 16, an embodiment of this application further provides a network system. The system includes a first device and a second device. Optionally, the first device is the network device 1500 shown in FIG. 15 or the network device 2000 shown in FIG. 16, and the second device is the network device 1500 shown in FIG. 15 or the network device 2000 shown in FIG. 16.

For methods performed by the first device and the second device, refer to the related descriptions in the embodiments shown in FIG. 2 and FIG. 12. Details are not described herein again.

It should be understood that the processor may be a central processing unit (central processing unit, CPU), or may be another general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or transistor logic device, a discrete hardware component, or the like. The general-purpose processor may be a microprocessor or any conventional processor or the like. It should be noted that the processor may be a processor that supports an advanced reduced instruction set computing machines (advanced RISC machines, ARM) architecture.

Further, in an optional embodiment, the memory may include a read-only memory and a random-access memory, and provide instructions and data for the processor. The memory may further include a non-volatile random-access memory. For example, the memory may further store information of a device type.

The memory may be a volatile memory or a non-volatile memory, or may include both a volatile memory and a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random-access memory (random-access memory, RAM), used as an external cache. By way of example, and not limitation, many forms of RAMs are available, for example, a static random-access memory (static RAM, SRAM), a dynamic random-access memory (dynamic random-access memory, DRAM), a synchronous dynamic random-access memory (synchronous DRAM, SDRAM), a double data rate synchronous dynamic random-access memory (double data rate SDRAM, DDR SDRAM), an enhanced synchronous dynamic random-access memory (enhanced SDRAM, ESDRAM), a synchlink dynamic random-access memory (synchlink DRAM, SLDRAM), and a direct rambus random-access memory (direct rambus RAM, DR RAM).

A computer-readable storage medium is further provided. The storage medium stores at least one program instruction or code, and when the program instruction or the code is loaded and executed by a processor, a computer is enabled to implement the data processing method in FIG. 2 or FIG. 12.

This application provides a computer program (product). When a computer program is executed by a computer, a processor or the computer may be enabled to perform corresponding steps and/or procedures in the foregoing method embodiments.

A chip is provided, including a processor. The chip is configured to invoke, from a memory, and run instructions stored in the memory, to enable a communication device in which the chip is mounted to perform the methods in the foregoing aspects.

For example, the chip further includes an input interface, an output interface, and the memory. The input interface, the output interface, the processor, and the memory are connected through an internal connection path.

A device is further provided. The device includes the foregoing chip. Optionally, the device is a network device. For example, the device is a router, a switch, or a server.

All or some of the foregoing embodiments may be implemented by using software, hardware, firmware, or any combination thereof. When software is used to implement the embodiments, all or some of the embodiments may be implemented in a form of computer program product. The computer program product includes one or more computer instructions. When the computer program instructions are loaded and executed on the computer, the procedures or functions according to this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state disk, SSD)), or the like.

In the foregoing specific implementations, the objectives, technical solutions, and beneficial effects of this application are further described in detail. It should be understood that the foregoing descriptions are merely specific implementations of this application, but are not intended to limit the protection scope of this application. Any modification, equivalent replacement, improvement, or the like made based on the technical solutions of this application shall fall within the protection scope of this application.

A person of ordinary skill in the art may be aware that, with reference to the method steps and modules described in embodiments disclosed in this specification, the method steps and modules can be implemented by software, hardware, firmware, or any combination thereof. To clearly describe interchangeability between the hardware and the software, the steps and compositions of the embodiments have been generally described in terms of functions in the foregoing descriptions. Whether these functions are performed by hardware or software depends on particular applications and design constraint conditions of the technical solutions. A person of ordinary skill in the art may use different methods to implement the described functions for each particular application, but it should not be considered that the implementation goes beyond the scope of this application.

A person of ordinary skill in the art may understand that all or some of the steps of the embodiments may be implemented by hardware or a program instructing related hardware. The program may be stored in a computer-readable storage medium. The storage medium may be a read-only memory, a magnetic disk, an optical disc, or the like.

When software is used to implement the embodiments, all or some of the embodiments may be implemented in a form of computer program product. The computer program product includes one or more computer program instructions. In an example, the method according to embodiments of this application may be described in the context of machine-executable instructions. For example, the machine-executable instructions are included in a program module that is in a component for execution on a real or virtual processor of a target. Generally, the program module includes a routine, a program, a library, an object, a class, a component, a data structure, and the like, and executes a specific task or implements a specific abstract data structure. In various embodiments, functions of program modules may be combined or split between the described program modules. The machine-executable instructions for the program module may be executed locally or within a distributed device. In the distributed device, the program module may be located in both a local storage medium and a remote storage medium.

Computer program code for implementing the method in embodiments of this application may be written in one or more programming languages. The computer program code may be provided for a processor of a general-purpose computer, a dedicated computer, or another programmable data processing apparatus, so that when the program code is executed by the computer or the another programmable data processing apparatus, functions/operations specified in the flowcharts and/or block diagrams are implemented. The program code may be executed entirely on a computer, executed partially on a computer, executed as a standalone software package, executed partially on a computer and partially on a remote computer, or executed entirely on a remote computer or a server.

In the context of embodiments of this application, computer program code or related data may be carried in any appropriate carrier, so that the device, the apparatus, or the processor can perform various types of processing and operations described above. Examples of the carrier include a signal, a computer-readable medium, and the like.

Examples of the signal may include an electrical signal, an optical signal, a radio signal, a voice signal, or other forms of propagated signals, such as a carrier wave and an infrared signal.

A machine-readable medium may be any tangible medium that includes or stores programs for or with respect to an instruction execution system, an apparatus, or a device. The machine-readable medium may be a machine-readable signal medium or a machine-readable storage medium. The machine-readable medium may include but is not limited to an electronic, magnetic, optical, electromagnetic, infrared, or semiconductor system, apparatus, or device, or any appropriate combination thereof. A more detailed example of the machine-readable storage medium includes an electrical connection with one or more conducting wires, a portable computer disk, a hard disk drive, a random-access memory (RAM), a read-only memory (ROM), an erasable programmable read-only memory (EPROM or flash memory), an optical storage device, a magnetic storage device, or any appropriate combination thereof.

It may be clearly understood by a person skilled in the art that, for the purpose of convenient and brief description, for a detailed working process of the foregoing system, device, and module, refer to a corresponding process in the foregoing method embodiments. Details are not described herein again.

In the several embodiments provided in this application, it should be understood that the disclosed system, device, and method may be implemented in other manners. For example, the described device embodiment is merely an example. For example, division into modules is merely division into logical functions and there may be other division modes during actual application. For example, a plurality of modules or components may be combined or may be integrated to another system, or some characteristics may be ignored or not executed. In addition, the displayed or discussed mutual couplings or direct couplings or communication connections may be indirect couplings or communication connections implemented through some interfaces, devices, or modules, or may be electrical, mechanical, or other forms of connections.

The modules described as separate parts may or may not be physically separate, and parts displayed as modules may or may not be physical modules, to be specific, may be located at one position, or may be distributed on a plurality of network modules. Some or all of the modules may be selected based on actual requirements to implement the objectives of the solutions of embodiments of this application.

In addition, functional modules in embodiments of this application may be integrated into one processing module, or each of the modules may exist alone physically, or two or more modules may be integrated into one module. The integrated module may be implemented in a form of hardware, or may be implemented in a form of software functional module.

When the integrated module is implemented in the form of software functional module and sold or used as an independent product, the integrated module may be stored in a computer-readable storage medium. Based on this understanding, the technical solutions of this application essentially, or the part contributing to the conventional technology, or all or some of the technical solutions may be implemented in a form of software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk drive, a read-only memory (read-only memory, ROM), a random-access memory (random-access memory, RAM), a magnetic disk, or an optical disc.

In this application, terms such as "first" and "second" are used to distinguish between same items or similar items that have basically same functions. It should be understood that there is no logical or time sequence dependency between "first", "second", and "nth", and a quantity and an execution sequence are not limited. It should also be understood that although the following descriptions use terms such as "first" and "second" to describe various elements, these elements should not be limited by the terms. These terms are simply used to distinguish one element from another. For example, without departing from a scope of the various examples, a first device may be referred to as a second device, and similarly, a second device may be referred to as a first device. Both the first device and the second device may be network devices of any type, and in some cases, may be separate and different network devices.

It should be further understood that, in embodiments of this application, sequence numbers of the processes do not mean execution sequences. The execution sequences of the processes should be determined based on functions and internal logic of the processes, and should not be construed as any limitation on implementation processes of embodiments of this application.

In this application, the term "at least one" means one or more, and the term "a plurality of" in this application means two or more. For example, a plurality of second packets means two or more second packets. The terms "system" and "network" are often used interchangeably herein.

It should be understood that the terms used in the descriptions of the various examples herein are merely intended to describe specific examples and are not intended to impose a limitation. The terms "one" ("a" and "an") and "the" of singular forms used in the descriptions of the various examples and the appended claims are also intended to include plural forms, unless otherwise specified in the context clearly.

It should further be understood that the term "include" (also referred to as "includes", "including", "comprises", and/or "comprising") used in this specification specifies presence of the stated features, integers, steps, operations, elements, and/or components, with presence or addition of one or more other features, integers, steps, operations, elements, components, and/or their components not excluded.

It should be further understood that the terms "if" and "assuming that" may be interpreted as a meaning of "when" ("when" or "upon") or "in response to determining" or "in response to detecting". Similarly, according to the context, the phrase "if it is determined that" or "if (a stated condition or event) is detected" may be interpreted as a meaning of "when it is determined that" or "in response to determining" or "when (a stated condition or event) is detected" or "in response to detecting (a stated condition or event)".

It should be understood that determining B based on A does not mean that B is determined based only on A, and B may alternatively be determined based on A and/or other information.

It should further be understood that "one embodiment", "an embodiment", and "a possible implementation" mentioned throughout the specification mean that specific features, structures, or characteristics related to the embodiment or an implementation are included in at least one embodiment of this application. Therefore, "in one embodiment" or "in an embodiment" or "a possible implementation" appearing throughout the specification may not necessarily refer to a same embodiment. In addition, these specific features, structures, or characteristics may be combined in one or more embodiments in any appropriate manner.

## Claims

1. A data processing method, wherein the method comprises:
obtaining, by a first device, at least one service flow, wherein any service flow in the at least one service flow comprises a plurality of code blocks, and the code block comprises a data unit and a type, or the code block comprises a type, a type indication, and code block content; and
mapping, by the first device, the plurality of code blocks to at least one physical layer PHY link based on a coding scheme of the code blocks, wherein the at least one PHY link is used to transmit the plurality of code blocks.

2. The method according to claim 1, wherein any PHY link in the at least one PHY link comprises at least one slot, the any PHY link in the at least one PHY link is further used to transmit s overhead multiframes, a format of the s overhead multiframes is determined based on the coding scheme, the s overhead multiframes comprise a mapping relationship between the at least one slot and the at least one service flow, the mapping relationship is used to map the plurality of code blocks to the PHY link, and s is determined based on a transmission rate of the PHY link.

3. The method according to claim 2, wherein a rate of the slot is 5m Gbps, one slot is used to transmit one code block, and m is an integer greater than 1.

4. The method according to claim 2 or 3, wherein any overhead multiframe in the s overhead multiframes comprises a plurality of overhead frames, and for at least one overhead frame in the plurality of overhead frames, any overhead frame in the at least one overhead frame comprises a mapping relationship between a slot and a service flow.

5. The method according to claim 4, wherein for the any overhead frame in the at least one overhead frame, the any overhead frame comprises a plurality of overhead blocks, and at least one overhead block in the plurality of overhead blocks comprises the mapping relationship between the slot and the service flow.

6. The method according to claim 5, wherein the any overhead multiframe comprises 32 overhead frames, and one overhead frame comprises two overhead blocks.

7. The method according to any one of claims 2 to 6, wherein the any PHY link comprises k slots, for the any overhead multiframe in the s overhead multiframes, the overhead multiframe comprises mapping relationships between k/s slots and the at least one service flow, k is determined based on a ratio of the transmission rate of the PHY link to the rate of the slot, and k is an integer multiple of s.

8. The method according to claim 7, wherein every s slots in the k slots are a slot group, k/s slots corresponding to an i^{th} overhead multiframe in the s overhead multiframes comprise i^{th} slots in all slot groups, and i is an integer greater than or equal to 0 and less than s, or i is an integer greater than 0 and less than or equal to s.

9. The method according to claim 7, wherein every k/s slots in the k slots are a slot group, k/s slots corresponding to an i^{th} overhead multiframe in the s overhead multiframes comprise slots comprised in an i^{th} slot group, and i is an integer greater than or equal to 0 and less than s, or i is an integer greater than 0 and less than or equal to s.

10. The method according to any one of claims 7 to 9, wherein the any PHY link is used to transmit s overhead blocks every time n*k code blocks are transmitted, an r^{th} overhead block in the s overhead blocks forms an r^{th} overhead multiframe in the s overhead multiframes, n is a positive integer, and r is an integer greater than or equal to 0 and less than s, or r is an integer greater than 0 and less than or equal to s.

11. The method according to any one of claims 2 to 10, wherein the mapping the plurality of code blocks to at least one physical layer PHY link comprises:
obtaining an overhead multiframe corresponding to the at least one service flow; and
modifying the overhead multiframe, and mapping the plurality of code blocks to the at least one PHY link based on a modified overhead multiframe.

12. The method according to any one of claims 1 to 10, wherein the plurality of code blocks comprise a code block of a data type and a code block of an idle type, and the mapping the plurality of code blocks to at least one physical layer PHY link comprises:
replacing at least one code block of the idle type in the plurality of code blocks with a code block comprising operation administration and maintenance OAM information, wherein the OAM information is used to manage the code block of the data type in the plurality of code blocks; and
mapping a plurality of code blocks obtained after replacement to the at least one PHY link.

13. The method according to any one of claims 2 to 12, wherein the any overhead multiframe in the s overhead multiframes further comprises at least two management channels, and the management channel comprises management information used to manage the at least one PHY link.

14. The method according to any one of claims 3 to 13, wherein m is 4 or 5.

15. The method according to any one of claims 5 to 14, wherein both the overhead block and the code block are 257 bits.

16. The method according to any one of claims 10 to 15, wherein n is 639 or 1279.

17. A data processing method, wherein the method comprises:
obtaining, by a second device, a plurality of code blocks transmitted over at least one physical layer PHY link, wherein the plurality of code blocks comprise a code block of an overhead type and a code block of a data type, and the code block of the data type comprises a data unit and a type, or the code block of the data type comprises a type, a type indication, and code block content; and
demapping, by the second device, the code block of the data type based on a coding scheme of the code block of the data type and the code block of the overhead type, to obtain at least one service flow, wherein the at least one service flow comprises the code block of the data type.

18. A data processing apparatus, wherein the apparatus is used for a first device, and the apparatus comprises:
an obtaining module, configured to obtain at least one service flow, wherein any service flow in the at least one service flow comprises a plurality of code blocks, and the code block comprises a data unit and a type, or the code block comprises a type, a type indication, and code block content; and
a mapping module, configured to map the plurality of code blocks to at least one physical layer PHY link based on a coding scheme of the code blocks, wherein the at least one PHY link is used to transmit the plurality of code blocks.

19. The apparatus according to claim 18, wherein any PHY link in the at least one PHY link comprises at least one slot, the any PHY link in the at least one PHY link is further used to transmit s overhead multiframes, a format of the s overhead multiframes is determined based on the coding scheme, the s overhead multiframes comprise a mapping relationship between the at least one slot and the at least one service flow, the mapping relationship is used to map the plurality of code blocks to the PHY link, and s is determined based on a transmission rate of the PHY link.

20. The apparatus according to claim 19, wherein a rate of the slot is 5m Gbps, one slot is used to transmit one code block, and m is an integer greater than 1.

21. The apparatus according to claim 19 or 20, wherein any overhead multiframe in the s overhead multiframes comprises a plurality of overhead frames, and for at least one overhead frame in the plurality of overhead frames, any overhead frame in the at least one overhead frame comprises a mapping relationship between a slot and a service flow.

22. The apparatus according to claim 21, wherein for the any overhead frame in the at least one overhead frame, the any overhead frame comprises a plurality of overhead blocks, and at least one overhead block in the plurality of overhead blocks comprises the mapping relationship between the slot and the service flow.

23. The apparatus according to claim 22, wherein the any overhead multiframe comprises 32 overhead frames, and one overhead frame comprises two overhead blocks.

24. The apparatus according to any one of claims 19 to 23, wherein the any PHY link comprises k slots, for the any overhead multiframe in the s overhead multiframes, the overhead multiframe comprises mapping relationships between k/s slots and the at least one service flow, k is determined based on a ratio of the transmission rate of the PHY link to the rate of the slot, and k is an integer multiple of s.

25. The apparatus according to claim 24, wherein every s slots in the k slots are a slot group, k/s slots corresponding to an i^{th} overhead multiframe in the s overhead multiframes comprise i^{th} slots in all slot groups, and i is an integer greater than or equal to 0 and less than s, or i is an integer greater than 0 and less than or equal to s.

26. The apparatus according to claim 24, wherein every k/s slots in the k slots are a slot group, k/s slots corresponding to an i^{th} overhead multiframe in the s overhead multiframes comprise slots comprised in an i^{th} slot group, and i is an integer greater than or equal to 0 and less than s, or i is an integer greater than 0 and less than or equal to s.

27. The apparatus according to any one of claims 24 to 26, wherein the any PHY link is used to transmit s overhead blocks every time n*k code blocks are transmitted, an r^{th} overhead block in the s overhead blocks forms an r^{th} overhead multiframe in the s overhead multiframes, n is a positive integer, and r is an integer greater than or equal to 0 and less than s, or r is an integer greater than 0 and less than or equal to s.

28. The apparatus according to any one of claims 19 to 27, wherein the mapping module is configured to: obtain an overhead multiframe corresponding to the at least one service flow; and modify the overhead multiframe, and map the plurality of code blocks to the at least one PHY link based on a modified overhead multiframe.

29. The apparatus according to any one of claims 18 to 27, wherein the plurality of code blocks comprise a code block of a data type and a code block of an idle type, and the mapping module is configured to: replace at least one code block of the idle type in the plurality of code blocks with a code block comprising operation administration and maintenance OAM information, wherein the OAM information is used to manage the code block of the data type in the plurality of code blocks; and map a plurality of code blocks obtained after replacement to the at least one PHY link.

30. The apparatus according to any one of claims 19 to 29, wherein the any overhead multiframe in the s overhead multiframes further comprises at least two management channels, and the management channel comprises management information used to manage the at least one PHY link.

31. The apparatus according to any one of claims 20 to 30, wherein m is 4 or 5.

32. The apparatus according to any one of claims 22 to 31, wherein both the overhead block and the code block are 257 bits.

33. The apparatus according to any one of claims 27 to 32, wherein n is 639 or 1279.

34. A data processing apparatus, wherein the apparatus is used for a second device, and the apparatus comprises:
an obtaining module, configured to obtain a plurality of code blocks transmitted over at least one physical layer PHY link, wherein the plurality of code blocks comprise a code block of an overhead type and a code block of a data type, and the code block of the data type comprises a data unit and a type, or the code block of the data type comprises a type, a type indication, and code block content; and
a demapping module, configured to demap the code block of the data type based on a coding scheme of the code block of the data type and the code block of the overhead type, to obtain at least one service flow, wherein the at least one service flow comprises the code block of the data type.

35. A network device, wherein the network device comprises a processor, the processor is coupled to a memory, the memory stores at least one program instruction or code, and the at least one program instruction or the code is loaded and executed by the processor, to enable the network device to implement the method according to any one of claims 1 to 17.

36. A network system, wherein the network system comprises a first device and a second device, the first device is configured to perform the method according to any one of claims 1 to 16, and the second device is configured to perform the method according to claim 17.

37. A computer-readable storage medium, wherein the computer-readable storage medium stores at least one program instruction or code, and when the program instruction or the code is loaded and executed by a processor, a computer is enabled to implement the method according to any one of claims 1 to 17.

38. A computer program product, wherein the computer program product comprises computer program code, and when the computer program code is run by a computer, the computer is enabled to implement the method according to any one of claims 1 to 17.

39. A chip, wherein the chip comprises a processor, and the processor is configured to: invoke instructions from a memory and run the instructions stored in the memory, to enable a communication device in which the chip is mounted to perform the method according to any one of claims 1 to 17.

40. The chip according to claim 39, further comprising an input interface, an output interface, and the memory, wherein the input interface, the output interface, the processor, and the memory are connected through an internal connection path.
